(19) Europäisches Patentamt
European Patent Office
Office européen des brevets

(11) EP 2 556 006 B1

(12) EUROPÄISCHE PATENTSCHRIFT

(45) Veröffentlichungstag und Bekanntmachung des Hinweises auf die Patenterteilung:
14.09.2016 Patentblatt 2016/37

(51) Int Cl.:
B65H 7/14 (2006.01)    G06T 7/00 (2006.01)
G06T 7/20 (2006.01)

(21) Anmeldenummer: 11714515.1

(22) Anmeldetag: 06.04.2011

(86) Internationale Anmeldenummer:
PCT/EP2011/055304

(87) Internationale Veröffentlichungsnummer:
WO 2011/124583 (13.10.2011 Gazette 2011/41)

(54) **VERFAHREN UND VORRICHTUNG ZUM GEREGELTEN TRANSPORTIEREN VON MEHREREN GEGENSTÄNDEN**

METHOD AND DEVICE FOR THE CONTROLLED TRANSPORT OF MULTIPLE OBJECTS

PROCÉDÉ ET DISPOSITIF POUR LE TRANSPORT RÉGULÉ DE PLUSIEURS OBJETS

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 07.04.2010 DE 102010014105

(43) Veröffentlichungstag der Anmeldung:
13.02.2013 Patentblatt 2013/07

(73) Patentinhaber: Siemens Aktiengesellschaft
80333 München (DE)

(72) Erfinder: ROMPE, Andre
12621 Berlin Kaulsdorf (DE)

(56) Entgegenhaltungen:
EP-A1- 2 048 596          WO-A1-01/74693
WO-A2-00/66280          WO-A2-2010/034044
DE-A1- 19 716 908        GB-A- 2 356 699
US-A- 5 331 151          US-A1- 2004 186 618
US-A1- 2006 228 100      US-A1- 2007 073 439

**Beschreibung**

Die Erfindung betrifft ein Verfahren und eine Vorrichtung zum Verändern der Geschwindigkeit, mit der mehrere Gegenstände transportiert werden, insbesondere der Geschwindigkeit, mit der mehrere flache Postsendungen zu einer Verarbeitungseinrichtung transportiert werden.

Die Aufgabe, die Geschwindigkeit, mit der Gegenstände transportiert werden, zu verändern, tritt z. B. dann auf, wenn die Gegenstände zu einer Verarbeitungseinrichtung zu transportieren sind und die Verarbeitungseinrichtung einen möglichst hohen Durchsatz erzielen soll. Zugleich soll weder ein Stau noch eine Verstopfung wegen der Zufuhr von Gegenständen zur Verarbeitungseinrichtung auftreten. Daher soll der Transport von Gegenständen zur dieser Verarbeitungseinrichtung geregelt werden. Die Messergebnisse sollen verwendet werden, um diese Regelung durchzuführen.

Diese Transportgeschwindigkeit wird abhängig von einem Maß für die Menge von transportierten Gegenständen verändert. Verschiedene Verfahren sind bekannt geworden, um dieses Mengen-Maß zu messen oder die Gegenstände auf andere Weise zu vermessen. Dieses Verfahren beruht darauf, dass Abbilder von einer Transport-Einrichtung, welche die Gegenstände transportiert, erzeugt und ausgewertet werden.

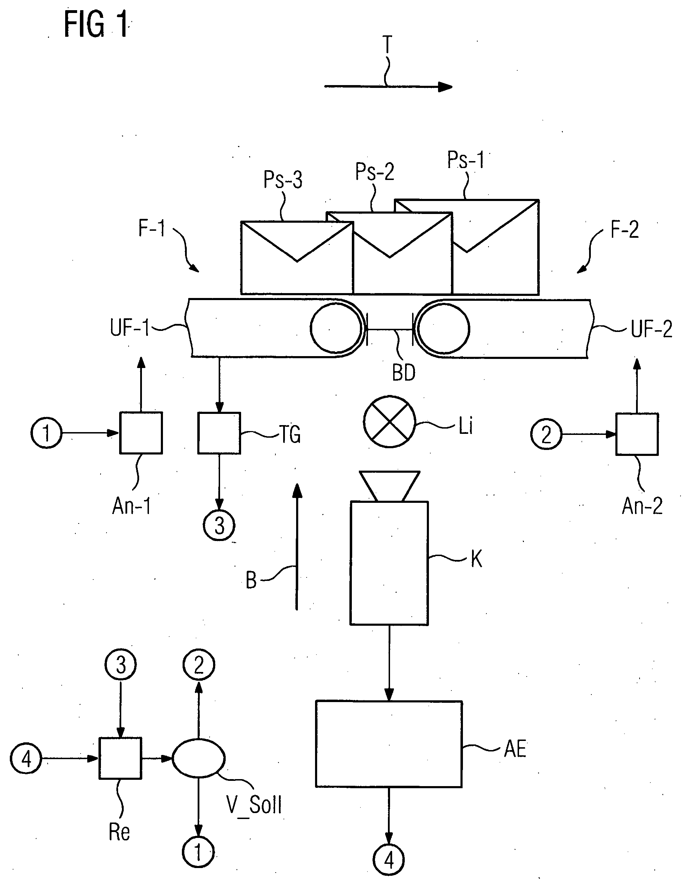

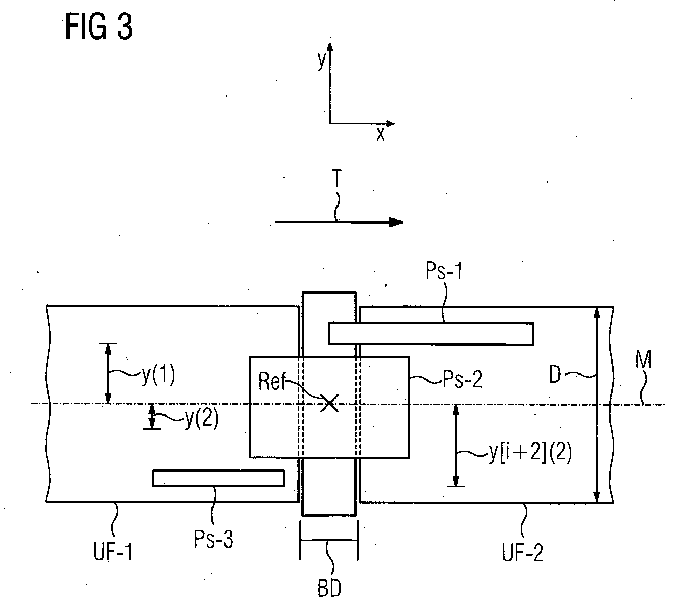

In der gattungsgemäßen US 2007/0073439 A1 werden eine Vorrichtung und ein Verfahren zum "visual tracking" beschrieben. Auf einem angetriebenen Horizontal-Förderband ("belt 112") liegt ein Gegenstand ("work piece 104") mit einem "visual feature 108". Der Gegenstand 104 auf dem Förderband 112 wird an einer Kamera 120 vorbei transportiert, vgl. Fig. 1. Das "vision tracking system 100" besitzt ein "processor system 300", welches über eine Schnittstelle ("image capture device interface 306") Signale von der Kamera 120 erhält und diese Signale mittels einer Schaltung ("processor 302") auswertet, vgl. Fig. 3. Ein "charge coupled device (CCD) 318" erfasst Bilder, welche die Linse 136 erzeugt, vgl. Abschnitt [0073]. Die Schnittstelle 306 bereitet die Signale für den "processor 302" auf. Der "processor 302" wertet die Bildsignale mittels einer "logic 314" aus und berechnet die Geschwindigkeit und/oder die Beschleunigung des Gegenstands 104, vgl. Abschnitt [0074]. Die "logic 314" vergleicht verschiedene entdeckte Merkmale, z. B. das Merkmal 108 oder "objects of interest" oder Kanten, in zwei aufeinander folgenden Aufnahmen ("frames of captured information"), vgl. Abschnitt [0075].

Indem die "logic 314" die entdeckten Merkmale in aufeinander folgenden Aufnahmen vergleicht, ermittelt die "logic 314" die Geschwindigkeit und/oder die Beschleunigung der entdeckten Merkmale, vgl. Abschnitt [0075] von US 2007/0073439 A1. Jedes optisch erfassbare Merkmal lässt sich verwenden, um die Geschwindigkeit oder die Beschleunigung zu ermitteln. Beispielsweise wird mit einem "edge detection algorithm" die Bewegung einer Kante des Gegenstands 104 entdeckt, vgl. Abschnitt [0131]. Zwei aufeinander folgende Aufnahmen lassen sich per "frame differencing" vergleichen, um "pixel geometries" zu untersuchen und dadurch eine Bewegung einer "pixel intensity" oder "pixel color" des Gegenstands 104 zu messen, vgl. Abschnitt [0131].

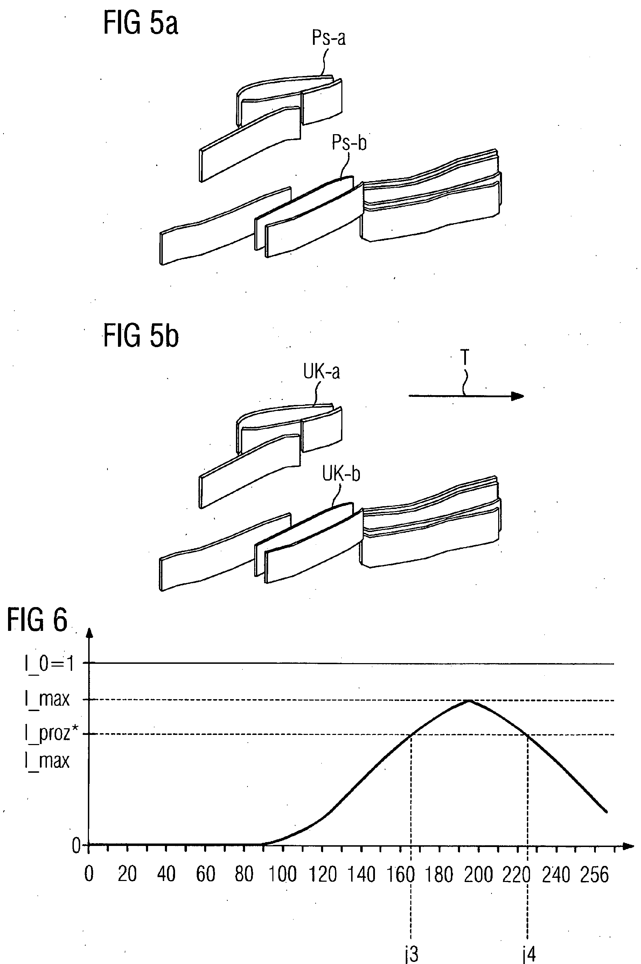

Die Anordnung von US 2007/0073439 A1 lässt sich dazu benutzen, um einen Roboter 402 mit einem "end effector 414" und zwei "manipulators 410, 412" zu regeln, vgl. Fig. 5A bis Fig. 5C und Abschnitt [0095] ff. Die Kamera ("image capture device 120") lässt sich entlang des Wegs ("track 126") bewegen, den der Gegenstand 104 auf dem Förderband 112 zurücklegt. Indem die Kamera 120 bewegt wird, wird verhindert, dass die Sicht der Kamera 120 auf das Merkmal 108 verdeckt wird ("occlusion"), vgl. Abschnitte [0096] bis [0101] und Fig. 5B, Fig. 5C. Möglich ist, dass anstelle der Kamera 120 auch der Gegenstand ("object") 104 bewegt wird, wofür die entdeckte Position des Gegenstands 120 relativ zur Kamera 104 verwendet wird, um die Geschwindigkeit, mit der der Gegenstand bewegt wird, zu verändern, vgl. Anspruch 79.

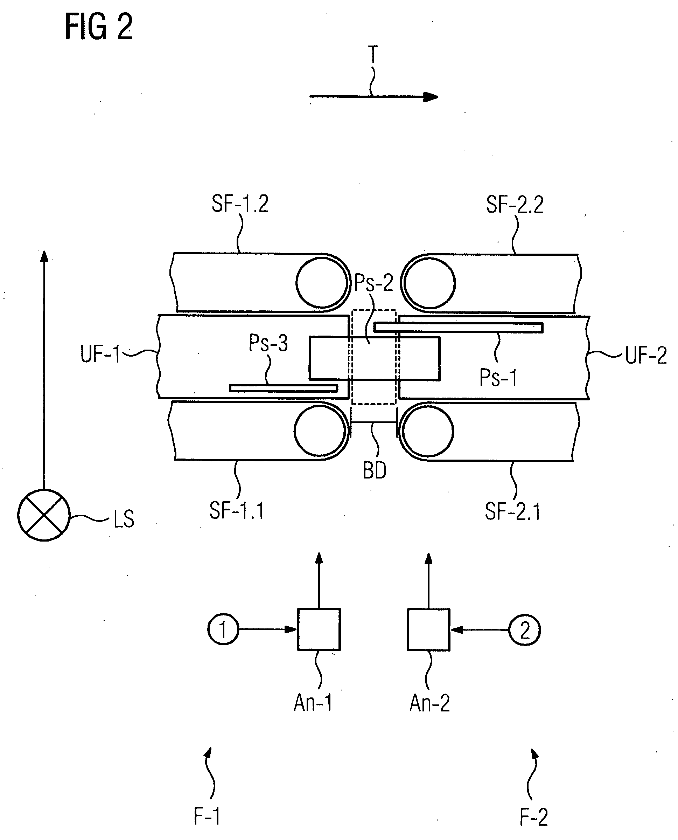

In GB 2356699 A werden ein Verfahren und eine Vorrichtung beschrieben, um Informationen über bewegte Gegenstände bereitzustellen. Ein Förderband ("conveyor 1") transportiert mehrere Gegenstände ("objects 2") in Richtung des Pfeils mit der Geschwindigkeit v von Fig. 1. Ein Roboter 5 mit einem Greifmittel ("gripping means 6") nimmt nacheinander jeweils einen Gegenstand 2 vom Förderband 1. Mindestens eine Kamera ("imaging apparatus 3") nimmt von oben Abbilder von Gegenständen 2 in einem Ausschnitt ("imaging area 40") der Oberfläche des Förderbands 1 auf. Ein Regler ("control unit 7") erhält Signale von der Kamera 3 und steuert den Roboter 5 an. Zu verhindern ist ein "double pick" des Roboters 5, also dass der Roboter 5 zweimal versucht, denselben Gegenstand 2 zu greifen. Dem Regler 7 werden die Bewegung (Richtung, Geschwindigkeit v) von Gegenständen 2 auf dem Förderband 1 vorgegeben. Dadurch kann der Regler 7 automatisch entscheiden, ob zwei Abbilder von Gegenständen 2, die in zwei aufeinander folgenden Abbildern des Ausschnitts 40 enthalten sind, von demselben Gegenstand stammen oder nicht, vgl. Fig. 2a und Fig. 2b. Mit Hilfe der Geschwindigkeit v und der Transportrichtung wird eine zu erwartende Position eines Gegenstands 2 auf dem Förderband 1 vorhergesagt. Mit Hilfe dieser Vorhersage wird entschieden, ob ein Gegenstand, der in einem Abbild gezeigt wurde, bereits in einem früheren Abbild gezeigt wurde.

In EP 2048596 A1 werden ein Verfahren und eine Vorrichtung beschrieben, um Bilder von Gegenständen aufzunehmen, während diese Gegenstände von einer Fördereinrichtung bewegt werden. Eine Fördersteuerung 30 liefert Daten über das Förderband 12 an eine Kamerasteuerung 26, vgl. Abschnitt [0023] und Fig. 1. Die Kamerasteuerung 26 steuert einen Zeilensensor 10 mit einer CCD-Zeile 24 und einem Objektiv 22 an, wobei der Zeilensensor 10 Abbilder von Gegenständen 14 auf dem Förderband 12 liefert, vgl. Abschnitt [0022] und Fig. 1. Die Fördersteuerung 30 steuert die Geschwindigkeit des Förderbands 12, vgl. Abschnitt [0023]. Die Kamerasteuerung 26 passt die Aufnahmefrequenz des Zeilensensors 10 an die aktuelle Geschwindigkeit des Förderbands 12 an, vgl. Abschnitt [0024] und Anspruch 1.

In WO 01/74693 A1 wird ein "hold and release singulating conveyor" beschrieben. Ein "parcel belt conveyor 19" leitet Gegenstände, z. B. Postpakete, auf einen "short belt buffer conveyor 20". Von dort gelangen die Gegenstände zu einem "acceleration conveyor 21", der die Gegenstände mit einer geregelten veränderbaren Geschwindigkeit weiter bis zu einem "singulator module 33" transportiert, vgl. Fig. 1 und S. 7. Der "singulator 33" hat eine "flat plate 301" mit einer Matrix von "through holds 302", durch die hindurch "supports 303" nach oben geschoben und wieder abgesenkt werden können, vgl. Fig. 3 und S. 8 unten. Jede Reihe von "supports 303" befindet sich zwischen zwei Reihen von "drive belts 306", vgl. Fig. 2 und Fig. 1. Ein "vision system 311" mit einer "camera 312" oberhalb des "singulators 33" erzeugt ein Abbild ("image") von Gegenständen ("parcels 64"), die sich aktuell auf dem "singulator 33" befinden. Dieses Abbild ermöglicht es, die Kontur ("two-dimensional location of the perimeter") jedes Gegenstands 64 auf dem "singulator 33" zu ermitteln, vgl. Fig. 2, Fig. 3 und S. 9 oben. Ein "controller 314" ermittelt durch Bildauswertung, welche "supports 303" sich unter einem Gegenstand 64 befinden, vgl. S. 9 / 1. Abs. und Fig. 3. Für jeden Gegenstand 64 wird eine Kennung ("number") für eine zugeordnete Gruppe von "supports 303" unter den Gegenstand 64 abgespeichert. Indem diese "supports 303" abgesenkt werden, sinkt der Gegenstand auf mehrere "drive belts 306" und wird dann abtransportiert.

In DE 102007037282 A1 wird ein Vermessungs- und Wiegesystem beschrieben. Ein Fördersystem 12 mit mehreren Förderbändern bewegt Pakete unter einer Vermessungseinrichtung 28 hindurch. Das Wiegesystem kann nur jeweils ein Paket wiegen. Daher wird vor dem Wiegen mittels Bildverarbeitung geprüft, ob die Pakete vereinzelt sind oder nicht. Nur dann, wenn das Wiegesystem ein vereinzeltes Paket gewogen hat, wird das gemessene Gewicht weiter verwendet. Die Vermessungseinrichtung 28 kann eine Kamera umfassen und erzeugt einen Abtaststrahl 40, der zu einem Strahl über die gesamte Breite des Förderbands führt, vgl. Fig. 1. Die Kamera empfängt das reflektierte Licht. Dadurch entsteht bei jeder Abtastung eine Anzahl von Datenpunkten in x-Richtung (senkrecht zur Transportrichtung des Förderbands). Entschieden wird, ob ein Bildpunkt von einem Paket oder vom Förderband stammt. In Fig. 5 werden die jeweiligen Datenpunkte 68a bis 68o von sieben zeitlich aufeinander folgenden Abtastungen gezeigt. Zwischen diesen Abtastungen wurde ein Paket 64 in y-Richtung transportiert. Durch Auswertung der Datenpunkte einer Abtastung wird festgestellt, ob in diesen Datenpunkten ein Datenpunkt von einem Paket gezeigt wird oder nicht, wofür untersucht wird, ob die gezeigte Höhe gleich Null oder größer Null ist. Weiterhin wird der Beginn, d. h. der vordere Punkt, eines "neuen" Pakets ermittelt. Falls ein Beginn eines Pakets ermittelt wird, wird eine neue Paketdatenstruktur für dieses neue Paket eröffnet. Dies wird durch den Punkt 70 in Fig. 5 und zusätzlich durch den Punkt 74 in Fig. 6 ausgelöst. Eine offene Paketdatenstruktur wird wieder geschlossen, wenn eine Abtastung keine Punkte von einem Paket mehr enthält. Vorausgesetzt wird, dass jedes Paket eine rechteckige Grundfläche hat und ohne seitliche Stütze auf dem Förderband steht. Diese Grundfläche wird identifiziert und bei Bedarf vermessen, indem Ecken und Kanten zwischen diesen Ecken durch Auswertung der Abtastergebnisse ermittelt werden. In Fig. 6 wird eine Situation gezeigt, in der zwei Pakete nebeneinander auf dem Förderband stehen.

In US 2006/0228100 A1 werden ein Verfahren und eine Vorrichtung beschrieben, um thermo-graphische Abbilder von bewegten Gegenständen zu erzeugen und zu analysieren. Ein "imager 22" eines "infrared detection system 20" liefert Infrarot-Bilder von Gegenständen ("objects 28"), die auf einem Förderband transportiert werden. Beispielsweise nimmt eine Infrarot-Kamera 22 von der Seite Abbilder von Flaschen 28 auf. Ein "frame grabber 26" erzeugt aus den Infrarot-Abbildern "bitmap images". In einer Ausgestaltung ist die Bildaufnahmefrequenz des "imagers 22" bekannt, und durch Vergleich mehrerer nacheinander erzeugter Abbilder ("bitmap images") wird die Geschwindigkeit berechnet, mit der ein Gegenstand 28 transportiert wird, vgl. Abschnitt [0029]. Hierfür wird ein "bitmap image" von einem nachfolgenden Aufnahme-Zeitpunkt berechnet und probeweise um verschiedene Strecken verschoben, und jedes verschobene "bitmap image" wird rechnerisch von einem "bitmap image", das zum vorhergehenden Aufnahme-Zeitpunkt erzeugt wurde, subtrahiert. Dieses Vorgehen wird für verschiedene Verschiebe-Strecken wiederholt, bis ein Fehlermaß ("standard deviation of error") minimiert wird. Die minimierende Verschiebungs-Strecke ist ein Maß für die Wegstrecke, den der Gegenstand zwischen den beiden Aufnahme-Zeitpunkten zurückgelegt hat.

In DE 1160792 A wird eine Einrichtung zum gleichmäßigen Beschicken einer Förderstrecke mit flachen Postsendungen beschrieben. Die schwankende Förderdichte in der Förderstrecke soll ausgeglichen werden. Ein Steuerungsmittel verändert die Geschwindigkeit, mit der ein Förderband der Förderstrecke die flachen Postsendungen transportiert. Am Anfang des abschüssig geneigten Förderbands ist eine Lichtschranke 12, 12' angeordnet. Diese Lichtschranke 12, 12' fungiert als ein Sensor für einen Regler, der den Antrieb des Förderbands ansteuert.

In US 3,373,685 und in CH 463846 wird eine "letter mail handling machine" beschrieben. Ein Förderband transportiert Postsendungen zu einer "primary separator section" und von dort zu einer "secondary separator section". Sensoren überwachen den Brieflauf.

In US 2004/0186618 A1 werden ein Verfahren und eine Vorrichtung beschrieben, um Gegenstände auf einer bewegten Oberfläche schrittweise weiterzubewegen ("indexing"). Ein "visual image generator 12" dieses "visual indexing system 10" projiziert ein "visual image 18" auf eine bewegte Oberfläche 16 eines Horizontal-Förderbands ("conveyor system 20"), vgl. Fig. 1, Fig. 2 und Abschnitt [0014]. Dieses projizierte Bild 18 ermöglicht Folgendes: "visually indexing deplacement of work pieces 35 and 36 upon the moving surface 16. Das "visual indexing system 10" projiziert eine Abfolge von Bildern an verschiedenen Positionen auf die Oberfläche 16, um einem Werker die korrekte Position der Werkstücke 35 und 36 zu zeigen, vgl. Abschnitt [0017].

Außerdem lässt sich durch das Verfahren von US 2004/0186618 A1 die Abweichung zwischen der tatsächlichen Kontur und einer Soll-Kontur eines Werkstücks 35, 36 ermitteln, vgl. Abschnitt [0017]. Fig. 2 zeigt mehrere projizierte Bilder 18A, 18B ff, vgl. Abschnitt [0062]. Oberhalb der Oberfläche 16 ist außerdem ein optischer Sensor 48 angebracht, der ein Abbild von der Oberfläche 16 erzeugt. Dieses Abbild zeigt ein reales Werkstück 35, 36 und außerdem projizierte Bilder 18, 18A, ... auf der Oberfläche 16, vgl. Abschnitt [0035]. Ein "data processor 15" erhält Abbilder vom Sensor 48 und vermag eine Abweichung zwischen einer geforderten Position, Orientierung oder Kontur des Werkstücks 34, 36 von der tatsächlichen Position, Orientierung bzw. Kontur festzustellen, vgl. Abschnitt [0036].

In einer abweichenden Ausführungsform von US 2004/0186618 A1 korrigiert der "data processor 115" eine Verzerrung ("distortion"), der das projizierte Bild dann unterworfen ist, wenn der "image generator 12" ein Bild schräg auf der Oberfläche 116 projiziert, vgl. Abschnitte [0039] ff. und Fig. 3. Ein Winkel 144 zwischen der Senkrechten und der Projektionsrichtung führt zu einem verzerrten Bild 118a. Der "data processor 115" erzeugt ein entzerrtes Bild 118C, wie auch 118A.

In US 5,331,151 wird eine Vorrichtung beschrieben, welche flache Postsendungen entdeckt, die aufrecht stehend in einem Transportkanal transportiert werden, vgl. Fig. 1. Möglich ist, dass mehrere Postsendungen sich - gesehen senkrecht zur Transportrichtung des Transportkanals - teilweise überlappen ("double feed - doubles detection"). In den Boden ("base portion 24") des Transportkanals ist ein Schlitz ("aperture 26") eingelassen. Ein Sensor ("detector head 20") mit einer Lichtquelle 28 in einer Linse 30 und einer Zeilenkamera ("CCD array 34") erzeugt Abbildungen von unten durch den Schlitz 26 hindurch. Gezählt wird, wie viele Postsendungen sich jeweils über den Schlitz 26 befinden. Hierfür werden die Signale vom Sensor 20 ausgewertet. In einer Ausführungsform erzeugt der Sensor 20 eine Serie von Analogsignalen, die mit den Kanten oder Übergängen der aufgenommenen Bilder korrespondieren. Diese Analogsignale werden digitalisiert, und durch Zählen wird entschieden, ob Postsendungen sich überlappen, ob also ein Doppelabzug vorliegt oder nicht.

In US 2007/0071284 A1 wird ein Verfahren beschrieben, um Doppelabzüge ("doubles detection") zu erkennen. Postsendungen werden von einem Vereinzeler ("singulator") vereinzelt und anschließend beabstandet zueinander ohne Schlupf transportiert. Hierbei stehen die Postsendungen aufrecht und werden während des Transports zeitweise zwischen zwei Endlos-Förderbändern eingeklemmt. Durch das Verfahren wird erkannt, ob zwei Postsendungen hierbei so transportiert werden, dass sie sich wenigstens teilweise überlappen (unerwünschter Doppelabzug) oder wie gewünscht beabstandet zueinander sind.

Eine Zeilenkamera ("CCD array sensor") der Anordnung von US 2007/0071284 A1 erzeugt eine Abfolge von Grauwertbildern, wobei die Kamera senkrecht nach oben schaut. Jede Aufnahme besteht aus mehreren Bildpunkten ("pixels"), und jeder Bildpunkt weist einen Intensitätswert auf. Die Aufnahmen werden durch unterschiedliche Verfahren digitalisiert. Aus den unterschiedlich digitalisierten Aufnahmen werden verschiedene Kennwerte abgeleitet, die zu einem einzigen Kennwert zusammengefasst werden. Ist dieser Kennwert größer als eine vorgegebene Schranke, so liegt ein Doppelabzug vor.

In WO 03/042082 A1 werden ein Verfahren und eine Vorrichtung zum Erkennen von Doppelabzügen beschrieben. Eine Abfolge von flachen Gegenständen, z. B. von flachen Postsendungen, wird aufrecht stehend in eine Transportrichtung transportiert. Eine Digitalkamera erzeugt mindestens ein Abbild, während die Gegenstände transportiert werden. Zugleich erfassen Positionssensoren die aktuelle Position jedes Gegenstands. Eine Auswerteeinheit wertet die Abbilder aus, um Doppelabzüge zu erkennen. Jede Aufnahme enthält eine Abfolge von Bildpunkten ("pixels"). Die "pixel densitive variation" wird analysiert, um Maxima und Minima zu finden. Diese Maxima und Minima werden gezählt, um zu zählen, wie viele Gegenstände in den Abbildern enthalten sind.

Auch in EP 1115507 B1 werden ein Verfahren und eine Vorrichtung beschrieben, um Doppelabzüge zu erkennen.

In EP 1472165 B1 wird beschrieben, wie eine Kamera von unten Aufnahmen von Postsendungen anfertigt, die über eine Transportstrecke transportiert werden. Die Kamera ist unterhalb der Transportstrecke angebracht und erzeugt Aufnahmen nach oben durch ein Fenster hindurch. In den Aufnahmen sind Muster zu erkennen, die von der Unterkante der Postsendungen stammen. Diese Muster werden mit statistischen Verfahren ausgewertet, wofür vorab berechnete Referenzmuster verwendet werden. Durch den Vergleich wird das Vorhandensein von sich überlappenden Postsendungen, sogenannten "Doppelabzügen", erkannt. Zwei sich überlappende Postsendungen lassen sich oft nicht verarbeiten, weswegen gewünscht wird, diese sogenannten Doppelabzüge rechtzeitig zu erkennen und zu beseitigen. Dieses Ziel wird durch eine statistische Auswertung erreicht.

Der Erfindung liegt die Aufgabe zugrunde, ein Verfahren und eine Vorrichtung zum Verändern einer Transportgeschwindigkeit, mit der eine Förder-Einrichtung mehrere Gegenstände transportiert, bereitzustellen, die auch dann anwendbar sind, wenn die Gegenstände in einem Transportkanal transportiert werden, in dem mehr als zwei Gegenstände nebeneinander transportiert werden können, und die nicht erfordern, dass bekannt ist, wie viele oder welche Gegenstände die Förder-Einrichtung erreichen.

Die Aufgabe wird durch ein Verfahren mit den Merkmalen des Anspruchs 1 und eine Vorrichtung mit den Merkmalen des Anspruchs 17 gelöst. Vorteilhafte Ausgestaltungen sind in den Unteransprüchen angegeben.

Lösungsgemäß werden ein Verfahren und eine Vorrichtung bereitgestellt, durch welche die Geschwindigkeit verändert wird, mit der Gegenstände transportiert werden. Diese Gegenstände liegen auf einer Transport-Komponente einer Förder-Einrichtung. Diese Transport-Komponente und damit die Gegenstände werden mit einer veränderbaren Transport-Geschwindigkeit bewegt. Mindestens einmal, vorzugsweise mehrmals, wird während des Transports ein Mess-Schritt durchgeführt. Jeder Mess-Schritt liefert ein Mess-Ergebnis. Abhängig von diesem Mess-Ergebnis wird eine Soll-Transportgeschwindigkeit berechnet, und zwei entweder als absoluten Wert oder als Veränderung ("increment") gegenüber der aktuellen Transportgeschwindigkeit. Die Ist-Transport-Geschwindigkeit wird bei Bedarf so verändert (erhöht oder reduziert), dass die Soll-Transportgeschwindigkeit erreicht wird.

Das lösungsgemäße Verfahren umfasst folgende Schritte:

Während des Transports werden nacheinander mehrere rechnerauswertbare Aufnahmen von einem Ausschnitt der Förder-Einrichtung erzeugt. Die Aufnahmen werden dergestalt erzeugt, dass folgende Bedingungen erfüllt werden:

- Alle Aufnahmen werden in dieselbe Bildaufnahmerichtung senkrecht oder schräg nach oben erzeugt.

- Jede Aufnahme umfasst mehrere Aufnahme-Komponenten.

- Jeder Gegenstand ist auf mindestens zwei Aufnahmen abgebildet.

Die Aufnahmen werden automatisch von einer Datenverarbeitungsanlage ausgewertet. Die Auswertung der Aufnahmen umfasst folgende Schritte:

Für jede Aufnahme wird geprüft, ob diese Aufnahme mindestens einen Gegenstand zeigt oder nicht. Für jeden Gegenstand, der in dieser Aufnahme gezeigt wird, wird mindestens eine Aufnahme-Komponente dieser Aufnahme ausgewählt, welche diesen Gegenstand zeigt. Dadurch werden für jede Aufnahme genauso viele Aufnahme-Komponenten dieser Aufnahme ausgewählt, wie die Aufnahme Gegenstände zeigt.

Für jede Aufnahme und jede erste Aufnahme-Komponente, die als von einem Gegenstand stammend ausgewählt wurde, wird nach einer zweiten Aufnahme-Komponente gesucht, die von demselben Gegenstand stammt. Diese zweite Aufnahme-Komponente gehört zu einer zeitlich nachfolgenden, also zeitlich später erzeugten Aufnahme.

Entweder wird eine solche zweite Aufnahme-Komponente gefunden, oder es wird festgestellt, dass es eine solche zweite Aufnahme-Komponente in keiner nachfolgenden Aufnahme gibt.

Alle ausgewählten Aufnahme-Komponenten werden ermittelt, die jeweils von demselben Gegenstand stammen. Diese ausgewählten Aufnahme-Komponenten gehören zu verschiedenen Aufnahmen.

Jeder Gegenstand, den mindestens eine Aufnahme - und daher mindestens zwei Aufnahmen - zeigt, wird vermessen. Hierfür werden die ausgewählten Aufnahme-Komponenten, die als von diesem Gegenstand stammend ermittelt wurden, ausgewertet. "Vermessen" bedeutet, dass durch das Auswerten ermittelt wird, welchen Wert ein vorgegebener geometrischer Parameter für diesen Gegenstand jeweils annimmt. Möglich ist, mehrere Parameterwerte zu messen.

Diese Ergebnisse des Vermessens werden als Ergebnis des Mess-Schritts verwendet.

Das lösungsgemäße Verfahren setzt nicht voraus, dass vorgegeben werden muss, welche oder wie viele Gegenstände die Förder-Einrichtung erreichen. Weiterhin spart die Erfindung die Notwendigkeit ein, dass eine Messvorrichtung die Gegenstände berührt oder wiegt. Weil Aufnahmen ausgewertet werden, werden die Gegenstände berührungslos vermessen, und ausgeschlossen wird, dass ein Gegenstand durch das Vermessen beschädigt wird. Aufgrund der Erfindung ist es auch nicht erforderlich, die Gegenstände zu zählen, bevor diese die Förder-Einrichtung erreichen.

Das lösungsgemäße Verfahren und die lösungsgemäße Vorrichtung setzen nicht voraus, dass jeder zu transportierende Gegenstand eine bestimmte geometrische Gestalt hat, z. B. rechteckig ist oder gerade ist.

Das Verfahren lässt sich auch dann anwenden, wenn sich mehrere Gegenstände - gesehen in eine waagerechte Betrachtungsrichtung senkrecht auf die Transportrichtung der Förder-Einrichtung - überlappen. Es ist nicht erforderlich, dass die flachen Gegenstände vor der Anwendung des Verfahrens vereinzelt werden. Eine Lichtschranke, die senkrecht zur Transportrichtung angeordnet ist, vermag hingegen nicht einzelne zu transportierende Gegenstände von sich überlappenden Gegenständen zu unterscheiden.

Das lösungsgemäße Verfahren und die lösungsgemäße Vorrichtung setzen nicht voraus, dass die Gegenstände während des Transports dergestalt gefasst werden, dass sie ohne Schlupf transportiert werden. Vielmehr können die Gegenstände auch z. B. in einem Transportkanal transportiert werden, wobei die Gegenstände auf einem Unterflur-Förderband als einer Transport-Komponente stehen. Möglich ist, dass deutlich mehr als zwei Gegenstände nebeneinander liegen oder stehen, während sie transportiert werden, also deutlich mehr als zwei Gegenstände sich - gesehen in eine Betrachtungsrichtung senkrecht zur Transportrichtung - überlappen.

Das lösungsgemäße Verfahren und die lösungsgemäße Vorrichtung erfordern auch nicht, die Aufnahmen mit statistischen Verfahren auszuwerten, so wie z. B. in EP 1472165 B1 beschrieben ist. Ein statistisches Verfahren setzt oft eine Modellannahme voraus, welche in der Praxis oft nicht gegeben ist.

Nicht erforderlich ist es, vorab eine Bibliothek mit Referenzbildern oder Referenzmustern anzulegen und diese mit den im laufenden Betrieb erzeugten Aufnahmen zu vergleichen.

Lösungsgemäß liegt jeder zu transportierende Gegenstand auf der Transport-Komponente und wird dadurch transportiert, dass die Transport-Komponente bewegt wird. Diese Art des Transports hat zur Folge, dass die zu transportierenden Gegenstände aufgrund der Schwerkraft an der Transport-Komponente ausgerichtet werden. Die Aufnahmen werden in eine Betrachtungsrichtung senkrecht oder schräg nach oben erzeugt. Diese Ausgestaltung bewirkt, dass der Abstand zwischen dem Bildaufnahmegerät, mit welchem die Aufnahmen erzeugt werden, und jedem zu transportierenden Gegenstand stets der gleiche ist. Nicht erforderlich ist es, die Höhe eines Gegenstands über der Transport-Komponente zu berücksichtigen oder gar zu messen. Insbesondere ist es nicht erforderlich, das Bildaufnahmegerät laufend an verschiedene Abstände vom jeweils aufzunehmenden Gegenstand anpassen zu müssen oder Aufnahmen mit sehr großer Tiefenschärfe zu erzeugen. Letzteres wäre insbesondere dann erforderlich, wenn mehrere Gegenstände unterschiedlicher Höhe in demselben Mess-Ausschnitt liegen und auf derselben Aufnahme abgebildet werden. Weil all dies nicht erforderlich ist, reichen ein einfaches Bildaufnahmegerät und eine Auswerteeinheit mit relativ geringer Rechenkapazität aus.

Das lösungsgemäße Verfahren und die lösungsgemäße Vorrichtung ermöglichen es, eine Verarbeitungsanlage zu regeln, durch welche die Gegenstände hierdurch transportiert werden, bevor oder nachdem sie in der Förder-Einrichtung transportiert werden. Für diese Regelung lässt sich der mindestens eine Merkmalswert jedes Gegenstands verwenden.

Als Bildaufnahmegerät reicht eine Zeilenkamera aus. Nicht erforderlich ist es, Aufnahmen mit einer Flächenkamera zu erzeugen und auszuwerten. Die Erfindung kommt nämlich mit einer zeilenförmigen Aufnahme pro Aufnahme-Zeitpunkt aus. Nicht erforderlich ist eine flächige Aufnahme. Weil nur zeilenförmige Aufnahmen benötigt werden, reicht es auch, die Aufnahmen durch einen Schlitz hindurch zu erzeugen. Nicht erforderlich ist es, einen Teil der Transport-Komponente aus durchsichtigem Material zu gestalten.

Vorzugsweise werden die Aufnahmen durch einen Schlitz zwischen zwei Transport-Komponenten hindurch erzeugt. Jeder Gegenstand liegt zunächst auf der ersten Transport-Komponente und wird von dieser ersten Transport-Komponente bis zum Schlitz transportiert und dann über den Schlitz hinweg transportiert, gelangt dann auf die zweite Transport-Komponente und wird von der zweiten Transport-Komponente weiter transportiert. Die beiden Transport-Komponenten sind z. B. zwei Unterflur-Förderbänder. Der Schlitz zwischen den Transport-Komponenten ist ohnehin vorhanden, so dass die Ausgestaltung die Notwendigkeit vermeidet, eigens für das Messen eine bestehende Förder-Einrichtung abändern zu müssen. Der Schlitz kann als Öffnung ausgestaltet sein oder mit einem lichtdurchlässigen Material ausgefüllt sein.

Vorzugsweise nimmt ein Bildaufnahmegerät die Aufnahmen mit einer von außen veränderbaren Bildaufnahmefrequenz auf. Diese Bildaufnahmefrequenz ist proportional zur Transportgeschwindigkeit, mit der die Förder-Einrichtung die Gegenstände transportiert. Diese Ausgestaltung stellt sicher, dass die Auflösung, die mittels der erzeugten Aufnahme bewirkt wird, nicht von der Geschwindigkeit abhängt, mit der ein Gegenstand transportiert wird. Vielmehr werden von einem Gegenstand stets gleich viele Aufnahmen erzeugt, egal wie groß die Transportgeschwindigkeit ist.

In einer Ausgestaltung wird die Länge eines transportierten Gegenstands gemessen, wobei die Länge die Abmessung des Gegenstands gesehen in die Transportrichtung der Förder-Einrichtung ist. Die Auswerteeinheit ermittelt alle ausgewählten Aufnahme-Komponenten, die von demselben Gegenstand stammen. Der Abstand zwischen zwei benachbarten ausgewählten Aufnahme-Komponenten hängt von der Transportgeschwindigkeit, der Bildaufnahmefrequenz und von der der Lage und der Orientierung des Gegenstands auf der Transport-Komponente ab. Die Auswerteeinheit legt automatisch einen Streckenzug oder einen sonstigen Kurvenzug durch die ausgewählten Aufnahme-Komponenten von diesem Gegenstand. Hierfür ordnet die Auswerteeinheit in einer Ausgestaltung die ausgewählten Aufnahme-Komponenten in einer Ebene an. Der Kurvenzug ist z. B. ein interpolierendes Polynom oder ein Spline. Die Aufnahmeeinheit berechnet die Länge dieses Kurvenzugs, und diese berechnete Länge wird als Länge des Gegenstands verwendet.

Diese Ausgestaltung ist vor allem dann von Vorteil, wenn flache biegsame Gegenstände transportiert und vermessen werden, wobei diese Gegenstände aufrecht stehend von der Transport-Komponente transportiert werden. Die Unterkanten dieser Gegenstände erzeugen die ausgewählten Aufnahme-Komponenten. Durch diese Ausgestaltung wird die Länge auch dann korrekt berechnet, wenn der Gegenstand gebogen ist und dadurch die Länge größer ist als der Abstand zwischen dem vordersten und dem hintersten Punkt gesehen in die Transportrichtung. Diese Ausgestaltung erfordert nicht, einen Krümmungsradius u. ä. zu berechnen, und ist genau als ein Verfahren, bei dem der Gegenstand durch eine gerade Strecke approximiert wird.

In einer Ausgestaltung ist das Bildaufnahmegerät, welches die Aufnahmen erzeugt, senkrecht oder schräg unterhalb der Transport-Komponente angeordnet. In einer anderen Ausgestaltung ist unterhalb der Transport-Komponente ein Spiegel angebracht, und das Bildaufnahmegerät erzeugt Aufnahmen von den im Spiegel gezeigten Gegenständen.

Im Folgenden wird die Erfindung anhand eines Ausführungsbeispiels beschrieben. Dabei zeigen:

Fig. 1    schematisch die Förderstrecke mit der Messvorrichtung von der Seite;

Fig. 2    schematisch die Förderstrecke von Fig. 1 von oben;

Fig. 3    die Situation von Fig. 1 durch eine Darstellung in Bildaufnahmerichtung B;

Fig. 4    die N Intensitätswerte für jeweils eine Postsendung in einer Aufnahme;

Fig. 5    eine zu einem Bild zusammengesetzte Sequenz von Aufnahmen, die mehrere Postsendungen zeigen;

Fig. 6    die Bestimmung der Kantendicke der Postsendungen.

Im Ausführungsbeispiel wird die Erfindung in einer Sortieranlage eingesetzt. Diese Sortieranlage sortiert flache Postsendungen (insbesondere Standard- und Großbriefe, Postkarten und Kataloge) und umfasst jeweils eine Komponente zum Formattrennen und zum Ausrichten ("culler - facer - canceller" - CFC) sowie einen Vereinzeler ("singulator").

Vorzugsweise ist der Culler als rotierende Trommel ausgestaltet, die mehrere Schlitze mit gleichen Abmessungen aufweist. Eine solche Einrichtung zum Formattrennen ist z. B. aus DE 10038690 C1 bekannt.

Ein Stapel von flachen Postsendungen wird angeliefert und im Culler nach Formaten getrennt. Jede Postsendung gelangt in die rotierende Trommel und fällt abhängig von ihrem jeweiligen Format durch einen Schlitz oder verbleibt in der Trommel. Die Postsendungen werden nach Formaten getrennt abtransportiert.

In einer Aussortierstation werden nicht maschinenfähige Postsendungen und sonstige Gegenstände aussortiert.

Die maschinenfähigen Postsendungen werden anschließend zu einer schrägen abschüssigen Bahn ("Wasserfall") transportiert. Diese Bahn führt zu einer Förderstrecke. Die Postsendungen rutschen die Bahn hinab, werden aufgerichtet und gelangen in eine Förderstrecke. Jede Postsendung erstreckt sich in einer Gegenstands-Ebene. Diese Gegenstands-Ebene steht annähernd senkrecht auf der Vertikalen, während die Förder-Einrichtung die Gegenstände transportiert.

Diese Förderstrecke ist im Ausführungsbeispiel als Abfolge von mehreren U-förmigen Transportkanälen ausgestaltet und transportiert die Postsendungen zum Vereinzeler. Diese vereinzelten Postsendungen durchlaufen anschließend die Sortieranlage. Diese Sortieranlage liest die Zustelladresse jeder Postsendung und schleust die Postsendung abhängig von der gelesenen Zustelladresse in eine Ausgabeeinrichtung aus.

Der Vereinzeler vereinzelt die zugeführten Postsendungen. Ein Strom von zueinander beabstandeten Postsendungen, die aufrecht auf jeweils einer Längkante stehen, verlässt den Vereinzeler. Vorgegeben ist ein Maß für die Soll-Durchsatzrate durch diesen Vereinzeler. Die Zufuhr von Postsendungen zum Vereinzeler soll innerhalb eines Toleranzbereichs um diesen vorgegebenen Wert liegen, damit weder ein großer Rückstau von Gegenständen auftritt noch der Vereinzeler mit reduzierter Geschwindigkeit betrieben werden muss oder gar "leer läuft" und abgeschaltet werden muss.

Im Ausführungsbeispiel wird die Erfindung dazu eingesetzt, um den Strom von Postsendungen zum Vereinzeler zu regeln. Für diese Regelung werden die zuzuführenden Postsendungen vermessen. Die Regelung verändert bei Bedarf die Transportgeschwindigkeit, mit der die Förder-Einrichtung die Postsendungen zum Vereinzeler transportiert. Durch eine GeschwindigkeitsRegelung wird erreicht, dass die Zufuhr von Postsendungen im Toleranzbereich liegt.

Im Ausführungsbeispiel wird die Erfindung als Bestandteil einer Messvorrichtung eingesetzt, die zwischen zwei U-förmigen Transportkanälen der Förderstrecke, die von der schrägen Bahn ("Wasserfall") zum Vereinzeler führt, eingebaut ist. Diese Messvorrichtung vermisst laufend die im Transportkanal befindlichen Postsendungen. Insbesondere zählt die Messvorrichtung wiederholt, wie viele Postsendungen sich zu einem Mess-Zeitpunkt im Transportkanal befinden, und misst die Länge jeder Postsendung gesehen in die Transportrichtung.

In einer Ausgestaltung wird zusätzlich die Lage jeder Postsendung im Transportkanal gemessen. Die Messvorrichtung liefert diese Werte auch dann, wenn mehrere Postsendungen sich - gesehen senkrecht zur Transportrichtung - teilweise oder vollständig überlappen.

Im Ausführungsbeispiel werden die zu vermessenden flachen Gegenstände also in einer Abfolge von mindestens zwei U-förmigen Transportkanälen transportiert. Jeder Transportkanal besitzt ein Unterflur-Förderband und zwei Seitenwände. Auch die Seitenwände können als Förderbänder ausgestaltet sein. Möglich ist auch, dass eine oder beide Seitenwände als glatte Stützvorrichtung ohne Förderwirkung ausgestaltet sind.

Die Gegenstände, hier also die Postsendungen, stehen aufrecht auf je einem oder auf zwei Unterflur-Förderbändern und werden von diesen Unterflur-Förderbändern transportiert. Hierbei lehnt jede Postsendung an einer Seitenwand an. Ist diese Seitenwand ebenfalls ein Förderband, so transportiert auch die Seitenwand die Postsendung. In einem U-förmigen Transportkanal können mehr als zwei Postsendungen nebeneinander transportiert werden, vorzugsweise bis zu vierzig Postsendungen. Während des Transports werden die Postsendungen nicht gefasst, sondern lehnen je an einer Seitenwand an. Dadurch wird die Schwerkraft auf die Gegenstände, hier auf die Postsendungen, ein und richtet die Postsendungen während des Transports an einem Unterflur-Förderband aus. Dieses Unterflur-Förderband fungiert als die Transport-Komponente. Der Transportkanal fungiert also zugleich als eine Freilaufstrecke.

Im Ausführungsbeispiel werden sowohl der CFC als auch der Vereinzeler von außen gesteuert, und zwar durch Stelleingriffe eines automatisch arbeitenden Reglers. Die jeweilige Steuerung stellt bestimmte Parameter des CFCs bzw. des Vereinzelers ein, z. B. die Geschwindigkeit, mit der sich die Trommel des Culler dreht, die Geschwindigkeit, mit der die Förderbänder eines Transportkanals bewegt werden, oder eine Abzugsgeschwindigkeit oder einen Anpressdruck, mit dem der Vereinzeler arbeitet. Messwerte von der lösungsgemäßen Messvorrichtung werden an die Steuerung des CFC und des Vereinzelers übermittelt.

In Fig. 1 werden schematisch die Förder-Einrichtung sowie die Messvorrichtung des Ausführungsbeispiels gezeigt. Fig. 2 zeigt die Förder-Einrichtung von Fig. 1 von oben.

In Fig. 1 und Fig. 2 werden zwei U-förmige Transportkanäle F-1, F-2 gezeigt. Diese beiden Transportkanäle F-1, F-2 gehören zu der Förder-Einrichtung von der schrägen Bahn zum Vereinzeler. Der Transportkanal F-2 befindet sich - gesehen in der Transportrichtung T - flussabwärts von dem Transportkanal F-1. Im Ausführungsbeispiel umfasst der Transportkanal F-1 zwei seitliche und vertikal angebrachte Endlos-Förderbänder SF-1.1, SF-1.2 und ein Unterflur-Förderband UF-1. Der Transportkanal F-2 umfasst zwei seitliche und vertikal angebrachte Endlos-Förderbänder SF-2.1, SF-2.2 und ein Unterflur-Förderband UF-2.

Die seitlichen Endlos-Förderbänder SF-1.1, SF-1.2, SF-2.1, SF-2.2 bilden die Seitenwände der Transportkanäle F-1, F-2 und sind in Fig. 1 fortgelassen. Ein Antrieb An-1 bewegt die Förderbänder des Transportkanals F-1, ein Antrieb An-2 die Förderbänder des Transportkanals F-2. Ein Regler Re steuert die beiden Antriebe An-1, An-2 an. Vorzugsweise gibt der Regler Re den Antrieben An-1, An-2 dieselbe zeitlich veränderliche Soll-Geschwindigkeit v-Soll vor.

In einer Ausgestaltung sind die Antriebe An-1, An-2 als Synchronmotoren ausgestaltet. Die Sollgeschwindigkeit v-Soll vom Regler Re ist daher gleich der tatsächlichen Soll-Geschwindigkeit v, mit der sich die Förderbänder der Transportkanäle F-1, F-2 bewegen.

In einer anderen Ausgestaltung sind beide Antriebe An-1, An-2 als Asynchronmotoren ausgestaltet. Die tatsächliche Geschwindigkeit v jeweils mindestens eines Förderbandes der Transportkanäle F-1, F-2 wird gemessen. Beispielsweise erzeugt ein Streckentaktgeber TG einen Impuls pro Wegstrecke, den das jeweilige Förderband zurücklegt. Die Anzahl der Impulse pro Zeiteinheit ist proportional zur gemessenen Geschwindigkeit des Förderbands. Der Regler Re regelt abhängig von der gemessenen tatsächlichen Geschwindigkeit v die Transportgeschwindigkeit der Transportkanäle F-1, F-2.

Solange sich eine Postsendung in einem Transportkanal F-1, F-2 befindet und von diesem Transportkanal F-1, F-2 transportiert wird, steht die Postsendung auf einer Längskante auf dem jeweiligen Unterflur-Förderband UF-1, UF-2. Die beiden seitlichen Endlos-Förderbänder drehen sich mit gleicher Geschwindigkeit und verhindern, dass die Postsendung umkippt. Häufig tritt beim Transport die Situation auf, dass mehrere Postsendungen nebeneinander transportiert werden und beim Transport schräg in Transportrichtung T versetzt sind.

Weil die seitlichen Förderbänder die Postsendungen nicht einklemmen, bewirkt die Schwerkraft, dass die Postsendungen mit je einer unteren Kante auf dem Unterflur-Förderband UF-1, UF-2 ausgerichtet werden. Vorzugsweise ruht eine Postsendung zu jedem Zeitpunkt auf mindestens einem der beiden Unterflur-Förderband UF-1, UF-2 und wird zu jedem Zeitpunkt von mindestens einem der seitlichen Endlos-Förderbändern SF-1.1, SF-1.2, SF-2.1, SF-2.2 nur lose gehalten. Dadurch bilden das Unterflur-Förderband UF-1 und die beiden seitlichen Endlos-Förderbänder SF-1.1, SF-1.2 zusammen den U-förmigen Transportkanal F-1. Das Unterflur-Förderband UF-2 und die beiden seitlichen Endlos-Förderbänder SF-2.1, SF-2.2 bilden zusammen den U-förmigen Transportkanal F-2. Jeder Transportkanal ist im Ausführungsbeispiel ca. 50 mm breit.

In einer anderen Ausgestaltung klemmen jeweils zwei gegenüberliegende seitliche Endlos-Förderbänder mindestens eine Postsendung zeitweise zwischen sich ein und transportieren diese dadurch. Die mindestens eine Postsendung steht hierbei hochkant. Sie ruht entweder auf dem Unterflur-Förderband oder auf einem Boden mit gleitender Oberfläche oder schwebt in der Luft und wird nur von den seitlichen Endlos-Förderbändern getragen. Möglich ist, dass die beiden Förderbänder mehrere sich überlappende Postsendungen zwischen sich einklemmen.

Im Beispiel von Fig. 1 und Fig. 2 werden drei Postsendungen Ps-1, Ps-2 und Ps-3 gezeigt, die sich teilweise überlappen. Die Postsendung Ps-1 ist höher und dicker als die Postsendungen Ps-2 und Ps-3 und läuft Ps-2 und Ps-3 etwas voraus. Ps-1 und Ps-2 haben bereits den Transportkanal F-2 erreicht. Ps-2 steht sowohl auf dem Unterflur-Förderband UF-1 als auch dem Unterflur-Förderband UF-2. Die Postsendung Ps-1 steht zu dem Zeitpunkt, den Fig. 1 veranschaulicht, nur auf dem Unterflur-Förderband UF-2. Ps-3 hat den Transportkanal F-2 noch nicht erreicht und steht nur auf dem Uriterflur-Förderband UF-1. Die Postsendung Ps-1 wird durch das seitliche Förderband SF-2.2 vor dem Umkippen bewahrt, die Postsendung Ps-3 durch das seitliche Förderband SF-1.1. Die Postsendung Ps-2 liegt schräg in den beiden Transportkanälen und wird durch die beiden anderen Postsendungen Ps-1 und Ps-3 seitlich gehalten. In der Draufsicht von Fig. 2 erscheint die Postsendung Ps-2 daher dicker als die beiden anderen Postsendungen, die annähernd senkrecht stehen.

Die sechs Endlos-Förderbänder UF-1, UF-2, SF-1.1, SF-1.2, SF-2.1, SF-2.2 der beiden Transportkanäle F-1 und F-2 werden mit einer vorgegebenen gleichen Transportgeschwindigkeit v bewegt und transportieren daher die drei Postsendungen Ps-1, Ps-2 und Ps-3 mit dieser gleichen Geschwindigkeit. Diese Geschwindigkeit v wird vorzugsweise gemessen, z. B. von einem Streckentaktgeber, der Impulse erzeugt, wobei die Anzahl der Impulse pro Zeiteinheit proportional zur Transportgeschwindigkeit des jeweiligen Förderbands ist.

Die Messvorrichtung umfasst im Ausführungsbeispiel

- eine Aktivierungs-Lichtschranke LS,

- eine Lichtquelle Li,

- ein Bildaufnahmegerät in Form einer Digitalkamera Ka und

- eine datenverarbeitende Auswerteeinheit AE.

Die Aktivierungs-Lichtschranke LS besitzt einen Sender LS-S und einen Empfänger LS-E und überwacht den Transportkanal F-1 und ist somit flussaufwärts vom Schlitz BD angeordnet. Der Lichtstrahl der Aktivierungs-Lichtschranke LS wird von Postsendungen unterbrochen, wenn diese im Transportkanal F-1 transportiert werden. Die Aktivierungs-Lichtschranke LS sendet dann, wenn der Lichtstrahl unterbrochen wird, ein Einschalt-Signal an die Lichtquelle Li und die Kamera Ka. Dieses Signal aktiviert die Lichtquelle Li und die Kamera Ka. Diese Ausgestaltung stellt sicher, dass beide Geräte aktiviert sind, wenn die Förderstrecke F-1, F-2 Postsendungen zum Vereinzeler transportiert. Möglich ist, dass die Aktivierungs-Lichtschranke LS ein Ausschalt-Signal an die beiden Geräte sendet, wenn der Lichtstrahl eine vorgegebene Zeitspanne lang nicht unterbrochen wird. Dieses Ausschalt-Signal deaktiviert die Geräte wieder.

In einer Ausgestaltung sendet die Lichtquelle Li Licht im sichtbaren Bereich aus. In einer bevorzugten Ausgestaltung sendet die Lichtquelle Li hingegen Infrarot-Licht aus, z. B. im Bereich von ca. 840 nm. Diese Ausgestaltung reduziert die Gefahr, dass sichtbares Licht, welches von außen einstrahlt, die Messergebnisse verfälscht. Nicht erforderlich ist es, die Messungen in einem abgedunkelten Raum durchzuführen. Möglich ist auch, dass die Lichtquelle Li Laserlicht aussendet.

Im Ausführungsbeispiel ist die Lichtquelle Li so ausgestaltet, dass sie den gesamten Schlitz BD weitgehend homogen ausleuchtet, d. h. mit gleicher Lichtintensität über die gesamte Breite des Schlitzes BD hinweg. Dadurch werden auch die Unterkanten der Postsendungen, die über den Schlitz BD hinweg transportiert werden, homogen ausgeleuchtet, egal an welcher Stelle die Postsendung über den Schlitz BD hinweg transportiert wird. Möglich ist, dass die Lichtquelle Li zwei einzelne Lichtquellen umfasst, die spiegelbildlich angeordnet sind und schräg von unten auf den Schlitz BD leuchten.

Vorzugsweise beleuchtet die Lichtquelle Li die Unterkanten der Postsendungen weitgehend homogen. Die Lichtquelle Li strahlt das Licht so aus, dass das Licht von unten durch den Schlitz BD auf die Unterkanten der Postsendungen fällt. Die Postsendungen reflektieren das Licht, das die Lichtquelle Li ausgesendet hat, wieder nach unten. Die Intensität des reflektierten Lichts hängt von der Oberfläche der jeweiligen Postsendung ab, insbesondere von der Farbe des Briefumschlags und davon, ob die Postsendung in einer Folie eingeschweißt ist oder ein Sichtfenster mit der Adresse aufweist oder keines davon zutrifft. Außerdem hängt die Intensität von der Lage der Postsendung im Transportkanal ab, also ob sie senkrecht steht oder schräg zur Vertikalen.

Die Lichtquelle Li ist weiterhin so ausgestaltet, dass die Lichtintensität in vertikaler Richtung nach oben hin, also senkrecht zur Transportrichtung und senkrecht zum Schlitz BD, stark abnimmt. Dadurch wird verhindert, dass die Vorderseite oder die Rückseite einer schräg stehenden Postsendung Reflexionen erzeugt, welche die Messergebnisse verfälschen können.

Die Kamera Ka ist im Ausführungsbeispiel unterhalb der Förderstrecke mit den Transportkanälen F-1 und F-2 angebracht. Die Kamera Ka nimmt Aufnahmen in eine Bildaufnahmerichtung B senkrecht oder schräg nach oben auf. Sie nimmt diese Aufnahmen durch einen Schlitz BD auf, der sich zwischen den beiden benachbarten waagrechten Unterflur-Förderbändern UF-1 und UF-2 der Transportkanäle F-1 und F-2 befindet und im Ausführungsbeispiel - gesehen in Transportrichtung T - ca. 5 mm und gemessen senkrecht zur Transportrichtung T ca. 50 mm breit ist. Die Postsendungen werden also über den Schlitz BD und somit über die Kamera Ka hinweg transportiert, wenn sie von F-1 an F-2 übergeben werden. Der Schlitz BD erstreckt sich über die gesamte Breite der Transportkanäle F-1, F-2 und senkrecht auf der Zeichenebene von Fig. 1.

Die Kamera Ka ist im Ausführungsbeispiel so angeordnet, dass der Bildausschnitt der Aufnahmen den gesamten Schlitz BD überdeckt und dadurch der gesamte Schlitz BD in den Aufnahmen abgebildet ist. Dadurch wird sichergestellt, dass eine Post-sendung, die über den Schlitz BD hinweg transportiert wird, in mindestens einer Aufnahme vorkommt, egal an welcher Stelle die Postsendung den Schlitz BD passiert. Durch eine geeignet große Bildaufnahmefrequenz $\lambda$ wird sichergestellt, dass jede Postsendung auf mindestens zwei Aufnahmen abgebildet wird.

Schräg neben dem Schlitz BD oder neben oder oberhalb der Unterflur-Förderbahn UF-1, UF-2 angeordnet ist. Unterhalb des Schlitzes BD befindet sich ein Spiegel, der Bilder des Schlitzes BD auf die Kamera Ka reflektiert. Diese Ausgestaltung reduziert die Gefahr, dass die Kamera Ka durch Partikel verschmutzt oder beschädigt wird, welche durch den Schlitz BD hindurch nach unten fallen. Der Spiegel lässt sich leichter reinigen als eine Linse der Kamera Ka.

Die Digitalkamera Ka ist vorzugsweise als Zeilenkamera ausgestaltet und weist N Bildaufnahme-Komponenten auf, die jeweils einen Bildpunkt liefern. Die Bildaufnahme-Komponenten sind beispielsweise als photoelektrische Komponenten ausgelegt, z. B. als Photovoltaik-Zellen. N beträgt beispielsweise 255. Jede Aufnahme Aufn[i] (i=1,2,...) besteht aus einer Zeile von N Aufnahme-Komponenten in Form von N Bildpunkten B[i,j] (j=1,2,...,N). Die Kamera Ka ist so angeordnet und konfiguriert, dass die N-Bildpunkte einer Aufnahme die gesamte Breite des Schlitzes abdecken. Dadurch ist sichergestellt, dass jede Postsendung, die über den Schlitz BD hinweg transportiert wird, in mindestens einer Aufnahme-Komponente gezeigt wird.

Zu jedem Zeitpunkt t[i] (i=1,2,...) erzeugt die Kamera Ka jeweils mindestens eine Aufnahme Aufn[i] (i=1,2,....). Dadurch erzeugt die Kamera Ka eine Abfolge Aufn[1], Aufn[2],... von Abbildern des Spalts BD von unten.

Das Verfahren erfordert nur Grauwertbilder, keine Farbbilder. Im Ausführungsbeispiel ist jeder Bildpunkt B[i,j] daher durch einen Intensitätswert I[i,j] gekennzeichnet (i=1,2,...; j=1,...,N). Jeder Intensitätswert ist z. B. ein Wert aus dem Interwall [0,1] oder allgemeiner aus dem Interwall [0,I_0]. Hierbei ist I_0 > 0 ein vorgegebener maximaler Intensitätswert.

Die Kamera Ka ist dazu ausgestaltet, das Licht aufzufangen, welches die Lichtquelle Li durch den Schlitz BD hindurch aussendet und welches von den Unterkanten der Postsendungen Ps-1, Ps-2, ... reflektiert wird. Die Kamera Ka ist weiterhin dazu ausgestaltet, unter Nutzung des reflektierten Lichts eine Abfolge von digitalen Aufnahmen zu generieren.

Die Kamera Ka nimmt mit einer Bildaufnahmefrequenz $\lambda$ die Aufnahmen auf. Die Bildaufnahmefrequenz $\lambda$ steigt vorzugsweise mit der Geschwindigkeit, mit der sich die beiden Unterflur-Förderbänder UF-1, UF-2 der beiden Förderstrecken F-1 und F-2 drehen und dadurch die Postsendungen transportieren, beispielsweise proportional. Vorzugsweise bleibt die Bildaufnahmefrequenz $\lambda$ konstant, solange sich die gemeinsame Fördergeschwindigkeit der Transportkanäle F-1 und F-2 nicht ändert.

In einer Ausgestaltung besitzt die Kamera Ka einen Eingang für Trigger-Signale. Über diesen Eingang lässt sich von außen ein Trigger-Signal an die Kamera Ka übermitteln, und das übermittelte Trigger-Signal löst die Erzeugung mindestens einer Aufnahme aus. Über diesen Trigger-Eingang lässt sich daher die Bildaufnahmefrequenz $\lambda$ der Kamera Ka von außen steuern. Beispielsweise ist der Trigger-Eingang mit dem Streckentaktgeber TG verbunden, der die Transportgeschwindigkeit v eines Transportkanals F-1, F-2 misst. Indem die Kamera Ka von außen über den Trigger-Eingang gesteuert wird, wird erreicht, dass die Bildaufnahmefrequenz $\lambda$ zur Anzahl der Impulse pro Zeiteinheit und damit proportional zur tatsächlichen Geschwindigkeit des Transportkanals F-1, F-2 ist. Dadurch wird erreicht, dass jede Postsendung im Zeitraum zwischen zwei aufeinanderfolgenden Aufnahmen Aufn[i], Aufn[i+1] stets den gleichen Weg zurück legt, egal wie groß die Transportgeschwindigkeit v des Förderkanals F-1, F-2 ist.

In einer anderen Ausgestaltung wird eine durchschnittliche Transportgeschwindigkeit der Transportkanäle F-1, F-2 gemessen oder vorgegeben. Die Bildaufnahmefrequenz $\lambda$ wird auf einen Wert abhängig von der durchschnittlichen Transportgeschwindigkeit eingestellt. Diese Ausgestaltung erfordert keinen Trigger-Eingang.

Die Bildaufnahmefrequenz $\lambda$ ist so groß, dass von jeder Postsendung mindestens zwei Aufnahmen erzeugt werden, während diese Postsendung sich oberhalb des Schlitzes BD befindet. Vorzugsweise wird eine Längentoleranz Tol für die Berechnung der Länge vorgegeben. Beispielsweise ist Tol = 1 mm. Die Bildaufnahmefrequenz $\lambda$ wird - in Abhängigkeit von der Toleranz Tol - so gewählt, dass die Postsendung zwischen den Zeitpunkten zweier aufeinander folgenden Aufnahmen um eine Strecke der Länge Tol in Transportrichtung weitertransportiert wird. Bei einer Länge eines Briefs von 250 mm werden ca. 250 Aufnahmen angefertigt, die diesen Brief zeigen, und zwar unabhängig von der Transportgeschwindigkeit v.

Als ein zu messendes Merkmal einer Postsendung wird die Länge vorgegeben. Die Länge jeder Postsendung wird durch Auswertung der Aufnahmen berechnet.

Eine Möglichkeit, die Anzahl und weitere Parameter der Postsendungen zu messen, ist die, eine Hough-Transformation auf die Abbilder anzuwenden. Durch eine Hough-Transformation werden automatisch Geraden, Kreise oder andere parametrierbare geometrische Figuren in einem Schwarz-Weiß-Bild erkannt. Hough-Transformationen werden z. B. in US 7,110,568 B2 und US 7,085,432 B2 beschrieben.

Eine Hough-Transformation, angewendet auf die Abbilder von dem Schlitz BD, setzt voraus, dass Kanten im Abbild erkannt werden, was oft nicht exakt möglich ist. Weiterhin ist es erforderlich, jedes Abbild vom Schlitz BD zu binarisieren, also jeden Pixel einen der Werte Weiß oder Schwarz zuzuordnen. Eine Hough-Transformation erfordert hohe Rechenleistung. Daher wird bevorzugt ein anderes Verfahren angewendet, das im Folgenden beschrieben wird.

Um in der Menge der Aufnahmen Aufn[i] die einzelnen Postsendungen zu unterscheiden, wird die Tatsache ausgenutzt, dass jede transportierte Postsendung in den Abbildungen als zusammenhängende Punktwolke gezeigt wird, die in der Regel von den Punktwolken anderer Postsendungen durch solche Bildpunkte getrennt sind, die nicht von Postsendungen stammen, also mit Intensitätswerten kleiner als I_min. In einzelnen Fällen gehen Punktwolken von verschiedenen Postsendungen ineinander über, und die Postsendungen lassen sich anhand der Gestalt der Punktwolken unterscheiden.

Fig. 3 veranschaulicht die Situation von Fig. 1 durch eine Darstellung in Bildaufnahmerichtung B. Die Bildaufnahmerichtung B steht senkrecht auf der Zeichenebene von Fig. 3. Zugleich veranschaulicht Fig. 3 ein weiteres Merkmal, das im Ausführungsbeispiel von jeder Postsendung gemessen wird, nämlich den Versatz relativ zu einem Referenzpunkt Ref. Dargestellt sind die Mittelachse M der Förderstrecke und die Projektionen der drei Postsendungen Ps-1, Ps-2 und Ps-3 senkrecht zur Transportrichtung T auf die Zeichenebene von Fig. 3.

Die Aufnahmen werden durch den Schlitz BD hindurch erzeugt. In der Aufnahme von Fig. 3 haben die Postsendungen Ps-1 und Ps-2 - genau wie in Fig. 1 und Fig. 2 - den Schlitz BD erreicht und befinden sich oberhalb des Schlitzes BD. Die Hinterkante von Ps-1 befindet sich oberhalb des Schlitzes BD. Die Postsendung Ps-3 hat den Schlitz BD noch nicht erreicht.

Die Mittelachse der Postsendung Ps-1 weist im Beispiel von Fig. 3 einen Versatz von y(1) auf, also einen Abstand von y(1) zur Mittelachse M.

Wie bereits dargelegt, besteht jede Aufnahme Aufn[i] aus N Bildpunkten B[i,j] (i = 1, 2, ...; j = 1, 2, ..., N). Jeder Bildpunkt wird durch einen Intensitätswert I[i,j] gekennzeichnet. Zum Zeitpunkt der Aufnahme ist das von einer Postsendung oder einer Komponente der Förder-Einrichtung F-1, F-2 reflektierte Licht mit dieser Lichtintensität auf die Bildaufnahme-Komponente aufgetroffen. Möglich ist, dass der Intensitätswert I[i,j] annähernd Null ist, weil keine Postsendung und keine sonstige Komponente Licht reflektiert, welches auf die Aufnahme-Komponente fällt. Die Aufnahme Aufn[i] wird also durch die Abfolge der N Intensitätswerte I[i,1],... , I[i,N] der N Bildpunkte gekennzeichnet.

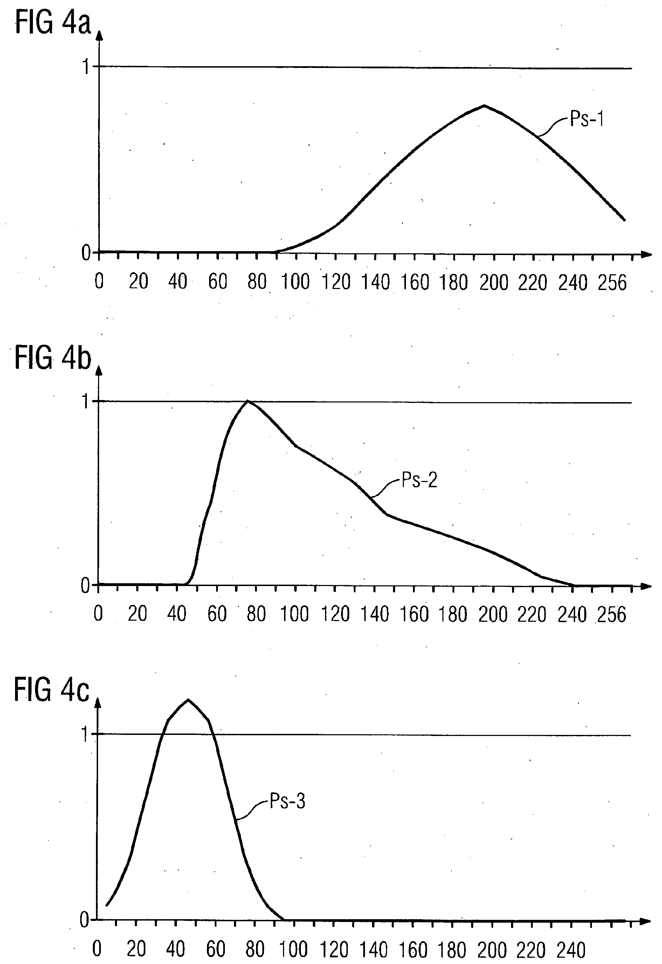

Fig. 4 veranschaulicht die N Intensitätswerte für jeweils eine Postsendung in einer Aufnahme. Dargestellt sind die N Intensitätswerte I[i,j] der N Bildpunkte B[i,j] einer Aufnahme Aufn[i]. Auf der x-Achse sind die Indizes der Bildpunkte B[i,j] von 1 bis N aufgetragen (im Beispiel N = 256), auf der y-Achse die N Intensitätswerte I[i,j]. In Fig. 4c (unten) werden die Intensitätswerte für die Postsendung Ps-3 gezeigt, eine dünne und senkrecht stehende Postsendung. Fig. 4b (Mitte) zeigt die Intensitätswerte für die Postsendung Ps-2, eine schräg, d. h. gekippt stehende dünne Postsendung. Fig. 4a (oben) zeigt die Intensitätswerte für die Postsendung Ps-1, eine dicke und senkrecht stehende Postsendung.

Für jeden Bildpunkt B[i,j] jeder Aufnahme Aufn[i] entscheidet die Auswerteeinheit AE, ob der Bildpunkt B[i,j] Licht abbildet, das von einer Postsendung reflektiert wurde, die sich oberhalb der Aufnahme-Komponente j befand, als die Kamera Ka zum Zeitpunkt t[i] die Aufnahme Aufn[i] erzeugte. Vorzugsweise wird der Wert der Intensität I[i,j] des Bildpunkts B[i,j] mit einem vorgegebenen unteren Schwellwert I_min verglichen. Falls I[i,j] < I_min ist, so wird entschieden, dass sich oberhalb des Bildpunkts zum Zeitpunkts t[i] keine Postsendung befindet. Der Bildpunkt bildet kein Licht ab, welches von einer Postsendung reflektiert wurde. Der Intensitätswert I[i,j] ist entweder gleich Null oder aufgrund von Reflexionen oder sonstigen Störereignissen größer 0. Dieser Bildpunkt B[i,j] wird für die weitere Auswertung nicht berücksichtigt.

Als nächstes ermittelt die Auswerteeinheit AE, welche Bildpunkte welcher Aufnahmen von derselben Postsendung stammen. Der Auswerteeinheit AE wird im Ausführungsbeispiel weder vorgegeben, wie viele Postsendungen über den Schlitz BD hinweg transportiert werden, noch, wann eine Postsendung den Schlitz BD passiert. Eine Postsendung kann senkrecht oder schräg liegend über den Schlitz BD hinweg transportiert werden und um einen Winkel gegenüber der Transportrichtung T gedreht transportiert werden. Diese Informationen werden vielmehr durch die Erfindung automatisch gemessen.

In einer bevorzugten Ausgestaltung ermittelt die Auswerteeinheit AE in jeder Aufnahme Aufn[i] die lokalen Maxima. Jede Aufnahme Aufn[i] besteht aus N Bildpunkten B[i,1],..., B[1,N], die durch N Intensitätswerte I[i,1],...,I[i,N] gekennzeichnet sind.

Möglich ist, dass eine Aufnahme Aufn[i] nur Bildpunkte B[i,j] mit Intensitätswerten I[i,j] < I_min zeigt. Diese Bildpunkte werden bei der Auswertung nicht berücksichtigt, so dass in dieser Aufnahme Aufn[i] keine lokalen Maxima ermittelt werden. Falls mindestens ein Bildpunkt B[i,j] einen Intensitätswert I[i,j] >= I_min aufweist, so wird in der Aufnahme Aufn[i] mindestens ein lokales Maximum gefunden.

Seien B[i,j(i,1)],...,B[i,j(i,N[i])] die N[i] lokalen Maxima in der Aufnahme Äufn[i]. Es gilt I[i,j(i,k)] >= I[i,j(i,k)-1] und I[i,j(i,k)] >= I[i,j(i,k)+1] für k = 1,..., N[i]. Dies bedeutet, dass der Bildpunkt B[i,j(i,k)] ein lokales Maximum ist, denn sein Intensitätswert I[i,j(i,k)[i)] ist größer als die oder gleich den jeweiligen Intensitätswerte der benachbarten Bildpunkte (i = 1,2, ...; k = 1,2, ..., N[i]). Im Beispiel von Fig. 4a hat die Aufnahme Aufn[i] ein lokales Maximum im Bildpunkt Nr. 190. Falls mehrere benachbarte Bildpunkte B[i,j1], B[i,j1+1],..., B[i,j2] (i=1,2,...; 1 <= j1 < j2 <= N) alle denselben Intensitätswert haben, so wird einer dieser Bildpunkte als lokales Maxima ausgewählt, zum Beispiel ein Bildpunkt in der Mitte des Bereichs von j1 bis j2.

Die Aufnahme Aufn[i] hat also N[i] lokale Maxima, wobei 0 <= N[i] < N ist. Hieraus folgert die Aufnahmeeinheit AE, dass sich zum Zeitpunkt T[i] genau N[i] Postsendungen oberhalb des Schlitzes BD befinden. Die N[i] lokalen Maxima sind Bildpunkte, die die N[i] unteren Kanten dieser N[i] Postsendungen über den Schlitz BD zeigen. Jede Postsendung, die sich zum Zeitpunkt T[i] über den Schlitz BD befindet, führt also zu genau einem lokalen Maximum B[i,j(i,k)] in der Aufnahme Aufn[i].

Als nächstes ermittelt die Aufnahmeeinheit AE, welche lokalen Maxima in verschiedenen Aufnahmen von derselben Postsendung stammen. Da jede Postsendung - gesehen in eine Betrachtungsrichtung senkrecht auf deren Gegenstandsebene - eine rechteckige oder in seltenen Fällen kreisförmige Kante hat, wird die Kante jeder Postsendung in x aufeinander folgenden lokalen Maxima von x aufeinander folgenden Aufnahmen Aufn[i+1],..., Aufn[i+x] gezeigt. Die Anzahl x kann für verschiedene Postsendungen variieren und ein Maß für die Länge der Postsendung sein, weil die Anzahl x dann, wenn die Bildaufnahmefrequenz λ proportional zur Transportgeschwindigkeit ist, proportional zur Länge der Postsendung ist. Weil die Aufnahmen so erzeugt werden, dass jeder Gegenstand auf mindestens zwei Aufnahmen gezeigt wird, ist x >= 2.

Mit N[i] wird die Anzahl der lokalen Maxima in der Aufnahme Aufn[i] bezeichnet, i = 1,2, .... Falls N[i+1] > N[i] ist, so besitzt die Aufnahme Aufn[i+1] mehr lokale Maxima als die unmittelbar vorausgehende Aufnahme Aufn[i]. Ein lokales Maximum stammt von der Unterkante einer Postsendung. Diese Unterkanten sind durchgehende Strecken. Daher zeigt die Aufnahme Aufn[i+1] mindestens eine Postsendung erstmals, d.h. diese Postsendung wird in keiner zeitlich vorhergehende Aufnahme Aufn[1],..., Aufn[i] gezeigt. Daher Diese Postsendung wird also in den ersten i Aufnahmen Aufn[1],..., Aufn[i] nicht gezeigt. Falls umgekehrt N[i+1] < N[i] gilt, so zeigt die Aufnahme Aufn[i] mindestens eine Postsendung letztmals, d.h. diese Postsendung wird in keiner nachfolgenden Aufnahme Aufn[i+1], Aufn[i+2], ... gezeigt. Aber auch dann, wenn N[i+1] = N[i] festgestellt wird, so kann Aufn[i] das letzte lokale Maximum von einer vorauslaufenden Postsendung und Aufn[i+1] das erste lokale Maximum einer nachfolgenden Postsendung zeigen.

Um trotzdem zu eindeutigen Ergebnissen zu gelangen, werden folgende beiden Tatsachen ausgenutzt:

1. Zwei Postsendungen können sich nicht durchdringen oder kreuzen.

2. Eine Postsendung kann schräg im Transportkanal F-1, F-2 stehen und bei geringer Biegesteifigkeit auch gekrümmt im Transportkanal stehen. Jedoch kann die Postsendung nicht eine Seitenwand SF-1.1, SF-1.2, SF-2.1, SF-2.2 durchdringen oder im Transportkanal schrumpfen. Diese Tatsache begrenzt die Schräglage, also die maximal möglichen Winkel zwischen der Kante der Postsendung und der Transportrichtung T.

Zunächst wird die zweite Bedingung ausgenutzt. Sei D die übereinstimmende Breite der beiden Transportkanäle F-1, F-2 und zugleich die Breite des Schlitzes BD. Die Kamera Ka nimmt Bildpunkte über die gesamte Breite D des Schlitzes BD hinweg auf. Im Ausführungsbeispiel sind die Bildaufnahme-Komponenten der Kamera Ka und daher die N Bildpunkte B[i,j] jeder Aufnahme Aufn[i] (i = 1, 2,...; j = 1, 2,..., N) äquidistant angeordnet. Daher haben zwei benachbarte Bildpunkte B[i,j] und B[i,j+1] einen Abstand von D / (N-1) zueinander. Zwei Bildpunkte B[i1,j1] und B[i2,j2] in zwei Aufnahmen Aufn[i1], Aufn[i2] haben einen seitlichen Versatz von (j1-j2) x D / (N-1) voneinander, also einen Versatz in eine Richtung senkrecht zur Transportrichtung T.

Falls die Postsendung schräg im Transportkanal liegt, so ist die Länge dieser Postsendung größer als die Ausdehnung in Transportrichtung T. Sei α der Winkel zwischen der Längsrichtung der als Gerade angenommenen Postsendung in der Transportrichtung. Dann ist die Länge der Postsendung gleich dem Quotienten aus der Ausdehnung in die Transportrichtung und cos(α). Weiter unten wird ein Ansatz beschrieben, um eine solche Schranke für α zu berechnen.

Vorgegeben wird weiterhin eine minimale Länge L-min einer Postsendung. Der Winkel α, also die maximal mögliche Schrägstellung, wird nach oben gemäß der Vorschrift sin α <= D / L-min begrenzt, falls die Postsendung vollständig biegesteif ist. Wegen geringerer Biegesteifigkeit kann der Winkel α etwas größer sein.

Sei λ die Bildaufnahmefrequenz der Kamera Ka, und sei v die Transportgeschwindigkeit, mit der die Transportkanäle F-1, F-2 eine Postsendung über den Schlitz BD hinwegtransportieren. Zwischen zwei Aufnahme-Zeitpunkten t[i], t[i+1] legt eine Postsendung den Weg v / λ in Transportrichtung T zurück. Diese Transportgeschwindigkeit wird geregelt und kann daher zeitlich variieren.

Bei einer Schrägstellung mit dem Winkel α tritt daher zwischen den beiden lokalen Maxima B[i,j(i,k1)] und B[i+1,j(i+1,k2)] (1 <= k1 <= N[i], 1 <= k2 <= N[i+1]), die von derselben Postsendung stammen und zu je aufeinander folgenden Aufnahmen Aufn[i] und Aufn[i+1] gehören, ein seitlicher Versatz Δy auf. Für diesen Versatz gilt:

$$\tan \ (\alpha) \ = \ \Delta y \ / \ \Delta x \ = \ \Delta y \ x \ \lambda \ / \ v.$$

Hieraus und aus sin $\alpha$ <= D / L-min wird eine obere Schranke für den seitlichen Versatz einer Postsendung hergeleitet. Die mögliche Krümmung einer Postsendung wird durch einen Sicherheitszuschlag berücksichtigt.

Insgesamt wird eine obere Schranke $\Delta y$-max für den seitlichen Versatz in [mm] zweier lokaler Maxima von derselben Postsendung in zwei aufeinander folgenden Aufnahmen Aufn[i] und Aufn[i+1] hergeleitet, und zwar abhängig von

-   der Breite D des Schlitzes BD

-   der minimalen Länge L-min einer Postsendung und

-   dem vorzugsweise konstanten Koeffizienten v / $\lambda$ aus Transportgeschwindigkeit v und Bildaufnahmefrequenz $\lambda$.

Aus dieser oberen Schranke $\Delta y$-max in [mm] wird eine obere Schranke $\Delta j$-max für den maximalen Index-Abstand zweier lokaler Maxima von derselben Postsendung in zwei aufeinander folgenden Aufnahmen Aufn[1] Aufn[1+1] hergeleitet, und zwar gemäß der Vorschrift $\Delta j$-max = $\Delta y$-max / (N-1), wobei N die Anzahl der äquidistanten Bildaufnahme-Komponenten und daher die Anzahl der Bildpunkte jeder Aufnahme ist.

In der zeitlich ersten Aufnahme Aufn[1] werden N[1] lokale Maxima B[1,j(1)],... B[1,j(N[1])] gefunden. Somit zeigt die erste Aufnahme Aufn[1] N[1] Postsendungen. Deren Indizes werden zeitweise abgespeichert. Weitere Informationen werden im Ausführungsbeispiel aus der ersten Aufnahme Aufn[1] nicht gewonnen.

Anschließend werden für i = 2, 3, 4,... die folgenden Schritte durchgeführt: Automatisch werden die N[i] lokalen Maxima B[i,j(1)],...,B[i,j(N[i])] einer Aufnahme Aufn[i] mit den N[i-1] lokalen Maxima B[i-1,j(i,1)],... B[i-1,j(i,N[i-1])] der unmittelbar vorhergehenden Aufnahme Aufn[i-1] paarweise verglichen. Falls für die beiden Bildpunkte B[i,j(1)] und B[i-1,j(i-1,1)] gilt:

$$|j(i,1) \ - \ j(i-1,1)| \ <= \ \Delta y\text{-max},$$

 so können die beiden ersten Maxima in den beiden aufeinander folgenden Aufnahmen Aufn[i-1] und Aufn[i] von derselben Post-sendung stammen, ansonsten nicht.

Diese paarweise Vergleiche werden für die übrigen lokalen Maxima von Aufn[i-1] und Aufn[i] fortgesetzt.

Die erste Randbedingung, also dass zwei Postsendungen sich nicht durchdringen können, erspart einige paarweise Vergleiche, die daher vorzugsweise auch nicht durchgeführt werden.

Falls nämlich festgestellt wurde, dass das erste lokale Maximum B[i-1,j(i-1,1)] in Aufn[i-1] und das zweite lokale Maximum B[i,j(2)] in Aufn[i] von derselben Postsendung stammen, so können das zweite lokale Maximum B[i-1,j(i-1,2)] in Aufn[i-1] und B[i,j(1)] in Aufn[i] nicht ebenfalls von derselben Postsendung Ps-y stammen, weil dann Ps-x und Ps-y sich durchdringen müssten, was physikalisch unmöglich ist.

Zu einem Auswertezeitpunkt hat die Auswerteeinheit AE insgesamt K verschiedene Postsendungen Ps-1,..., Ps-K in den bislang ausgewerteten Aufnahmen Aufn[1], Aufn[2],... gezählt.

Vorzugsweise wird diese Auswertung unter Verwendung eines gleitenden Zeitfensters von T[i0-x] bis T[i0] durchgeführt. Zum Zeitpunkt T[x] stehen der Auswerteeinheit AE die x Aufnahmen Aufn[1], Aufn[2],..., Aufn[x] zur Verfügung. In diesen x Aufnahmen erkennt die Auswerteeinheit AE insgesamt K[x] verschiedene Postsendungen. Die Aufnahmeeinheit AE liefert als ein Ergebnis die Anzahl K = K[x] Postsendungen, die bis zum Zeitpunkt T[x] den Schlitz BD passiert oder wenigstens erreicht haben.

Vorzugsweise liefert die Auswerteeinheit AE zusätzlich die Länge jeder Postsendung Ps, sobald diese Post-sendung Ps den Schlitz BD vollständig passiert hat. Bereits dargelegt wurde, dass die Auswerteeinheit AE ermittelt, welche lokalen Maxima von derselben Postsendung stammen. Diese lokalen Maxima von derselben Postsendung Ps treten in x aufeinander folgenden Aufnahmen Aufn[i+1],..., Aufn[i+x] auf, nämlich jeweils genau ein lokales Maximum von der Postsendung Ps in jeder Aufnahme Aufn[k] (k = i+1,..., i+x). In den ersten i Aufnahmen Aufn[1],..., Aufn[i] sowie in allen nachfolgenden Aufnahmen Aufn[i+x+1], Aufn[i+x+2], ... wird die Postsendung Ps ebenfalls nicht gezeigt.

Die Transportgeschwindigkeit v und die Bildaufnahmefrequenz $\lambda$ werden in der Zeitspanne, innerhalb derer die Postsendung Ps über den Schlitz BD hinwegtransportiert wird, beide als annähernd konstant bleibend aufgefasst. Dann legt die Postsendung, Ps zwischen zwei aufeinander folgenden Aufnahme-Zeitpunkten T[j], T[j+1] (j = 1, 2,...) daher die Strecke v / $\lambda$ zurück. Die Postsendung Ps wird erstmals in der Aufnahme Aufn[i+1] und letztmals in der Aufnahme Aufn[i+x] gezeigt. Die Vorderkante wird also etwa zum Zeitpunkt T[i+1] über den Schlitz BD transportiert, die Hinterkante zum Zeitpunkt T[i+x]. Zwischen dem ersten Aufnahme-Zeitpunkt T[i+1] und dem letzten Aufnahme-Zeitpunkt T[i+x] wird die Postsendung Ps um den Weg x * v / λ transportiert. Dieser Weg x * v / λ ist ein Näherungswert für die Projektion der Länge der Postsendung Ps auf die Transportrichtung und weicht um maximal um die Toleranz Tol von der tatsächlichen Ausdehnung ab.

Fig. 5a zeigt eine Sequenz von Aufnahmen, die jeweils mehrere Postsendungen zeigen. Der Schlitz BD liegt in der Zeichenebene und verläuft von oben nach unten. Die Bildpunkte einer Aufnahme liegen daher in einer senkrechten Linie. Die Aufnahmen wurden erzeugt, während die Postsendungen von links nach rechts in Transportrichtung T transportiert wurden. In Fig. 5a sind beispielhaft die Abbilder zweier Postsendung Ps-a und Ps-b darstellt.

Im Ausführungsbeispiel sind die transportierten Gegenstände rechteckig und flach. Jeder Gegenstand steht mit einer Kante auf dem Unterflur-Förderband. In der Abfolge von Aufnahmen Aufn[1], Aufn[2], ... wird die untere Kante jeder Postsendung identifiziert. Diese Unterkante ist als Linie mit maximalem Intensitätswert in der Punktwolke von einer Postsendung erkennbar. Fig. 5b zeigt die Abbilder der Unterkanten von Post-sendungen, die in der Abfolge von Aufnahmen identifiziert wurden. In Fig. 5b sind beispielhaft die Abbilder der Unterkanten UK-a und UK-b der Postsendung Ps-a und Ps-b bezeichnet.

Für jede Postsendung, die in den Aufnahmen identifiziert wurde, wird deren Länge berechnet. Die Postsendung wird in m+1 aufeinander folgenden Aufnahmen Aufn[i], Aufn[i+1], ... , Aufn[i+m] abgebildet. Gezählt wird diese Anzahl m+1, beispielsweise indem der Anfangspunkt und der Endpunkt der Unterkante in den Aufnahmen ermittelt wird. Die Bildaufnahmefrequenz beträgt λ, die Transportgeschwindigkeit beträgt v. Zwischen zwei Aufnahmen legt die Postsendung also eine Strecke von v / λ zurück. In der Zeitspanne, in der die m+1 Aufnahmen gemacht werden, legt die Postsendung demnach einen Weg von m * v / λ zurück. Also hat die Postsendung eine Ausdehnung von m * v / λ in Transportrichtung T.

Möglich ist, dass die Postsendung nicht parallel zur Transportrichtung T im Transportkanal liegt, sondern verdreht ist. Daher werden der Versatz der Vorderkante und der Versatz der Hinterkante der Postsendung berechnet. Vorgegeben wird daher ein Referenzpunkt Ref im Schlitz BD. Dieser Referenzpunkt Ref befindet sich z. B. auf der gemeinsamen Mittelachse M der beiden Unterflur-Förderbänder UF-1 und UF-2. Vorgegeben wird weiterhin ein x-y-Koordinatensystem mit dem Referenzpunkt Ref als Ursprung. Die x-Achse dieses Koordinatensystems zeigt in Transportrichtung T. Die y-Achse steht senkrecht auf der Transportrichtung T und verläuft in Längsrichtung des Schlitzes BD.

Die Auswerteeinheit AE ermittelt nicht nur, in welchen m+1 Aufnahmen Aufn[i], ..., Aufn[i+m] eine Postsendung vorkommt, sondern zusätzlich mindestens einen Bildpunkt B[i,j1] der Aufnahme Aufn[i], der den Anfangspunkt der Unterkante zeigt, sowie mindestens einen Bildpunkt B[i+m,j2], der den Endpunkt der Unterkante zeigt. Die beiden Indizes j1 und j2 liegen zwischen 1 und N. Sei D die übereinstimmende Breite der beiden Transportkanäle F-1 und F-2 und zugleich die Breite des Schlitzes BD. Die Kamera Ka nimmt Bildpunkte über die gesamte Breite D des Schlitzes BD hinweg auf. Im Ausführungsbeispiel sind die Bildaufnahme-Komponenten der Kamera Ka und daher auch die Bildpunkte der Aufnahmen äquidistant angeordnet. Daher bilden zwei benachbarte Bildpunkte einen Bereich der Länge D / N ab.

Der Endpunkt der Unterkante hat gegenüber dem Anfangspunkt einen Versatz von |j2 - j1| * D / N. Mit Hilfe dieses Versatzes und der Ausdehnung der Postsendungs-Unterkante in Transportrichtung wird die Länge der Unterkante berechnet (rechtwinkliges Dreieck) und als Länge der Postsendung verwendet. In dieser Ausgestaltung wird die Unterkante durch eine Linie approximiert, also die Krümmung der Unterkante vernachlässigt.

In einer anderen Ausgestaltung wird die Unterkante der Postsendung nicht durch eine Linie approximiert, sondern durch einen Kurvenzug oder Streckenzug, um die Länge der Postsendung zu berechnen. Diese Ausgestaltung berechnet die Länge einer Postsendung, die gebogen oder gekrümmt über den Schlitz BD hinwegtransportiert wird wesentlich genauer als eine Approximation durch eine Linie. Ist die Postsendung hingegen gerade, liefert diese Ausgestaltung das gleiche Ergebnis wie eine Approximation durch eine Strecke.

Die Postsendung wird wiederum in m+1 aufeinander folgenden Aufnahmen Aufn[i], Aufn[i+1], ..., Aufn[i+n] gezeigt. Zwischen zwei aufeinander folgenden Aufnahme-Zeitpunkten T [j-1] und T[j] hat die Postsendung den Weg s(j) zurückgelegt. Falls die Geschwindigkeit zwischen den m+1 Aufnahme-Zeitpunkten T[i], ..., T[i+m] gleichbleibt und stets v beträgt, so ist s[j] = v/λ. Sei S (y) der Weg, den die Postsendungen zwischen den Aufnahme-Zeitpunkten T[0] und T[j] zurücklegt. Es ist S(y)= s(1) + s(2) + ... + s(j). Seien B[i,j(1)], ..., B[i+m,j(m)] diejenigen ausgewählten Bildpunkte, die von dieser Postsendung stammen. Zwei benachbarte Bildpunkte B[i,j] und B[i,j+1] derselben Aufnahme Aufn[i] haben einen Abstand von D/(N-1) voneinander. In einem zweidimensionalen Koordinatensystem mit der x-Achse in Transport-trichtung und der y-Achse in Richtung des Schlitzes BD beschreiben die Punkte.

Beschreibt die {([0,j(1) *D/(n-1)], [S(1),j(2)*D/(N-1)], [S(2),j(3)*D/(N-1)], [S(m-1),j(n-1)*D/(N-1)], [S(m),j(m)*D(N-1)]} näherungsweise die Unterkante dieser Postsendung. Durch diese Abfolge von (m+1) Punkten im zweidimensionalen Koordinatensystem wird ein Kurvenzug festgelegt, der im ersten Punkt [0,j(1)*D/(N-1)] beginnt und im letzten Punkt [S(m),j(n)*D/(N-1)] endet. Der Kurvenzug ist z. B. ein Streckenzug, ein interpolierendes Polynom oder ein Spline.

Vorzugsweise wird zusätzlich die relative Lage jeder Postsendung Ps oder zumindest einiger Postsendungen - zum Beispiel langer Postsendungen - im Transportkanal F-1, F-2 bestimmt. Wie bereits dargelegt, wird diese Post-sendung in den x Aufnahmen Aufn[i+1],..., Aufn[i+x] gezeigt. Seien B[i+1,j(i+1,k[i+1])],..., B[i+x,j(i+x,k[i+x])] die x lokalen Maxima von dieser Postsendung Ps. Die Indizes k[i+1],..., k[i+x] beschreiben die relative Lage der Postsendung im Transportkanal. Gilt zum Beispiel k[i+1] = ... = k[i+x], so liegt die Postsendung parallel zu den Seitenwänden im Transportkanal. Gilt k[i+1] = ... = k[i+x] = 1 oder = N, so lehnt die Postsendung Ps ohne Schrägstellung an einer Seitenwand. Ist hingegen k[i+1] = 1 und k[i+x] = N, so wird die Postsendung Ps mit der maximal möglichen Schrägstellung im Transportkanal F-2, F-2 transportiert.

Jede Postsendung steht mit ihrer Unterkante auf einem Unterflur-Förderband. Vorzugsweise wird zusätzlich die Dicke jeder Postsendung berechnet. Um die Dicke zu berechnen werden wiederum diejenigen N-Intensitätswerte I[i,1],..., I[i,N] der N Bildpunkte B[i,1],...,B[i,N] jeder Aufnahme Aufn[i](i = 1, 2,...) verwendet, die größer als I_min sind. Jede Aufnahme Aufn[i] besitzt N[i] lokale Maxima. Zwischen jeweils zwei lokalen Maxima liegt ein lokales Minimum. Die Bildpunkte zwischen zwei lokalen Minima zeigen alle dieselbe Postsendung oder gar keine Postsendung. Die ersten Bildpunkte bis zum ersten lokalen Maximum und die letzten Bildpunkte nach dem letzten Maximum in der Abfolge der N Bildpunkte einer Aufnahme zeigen ebenfalls jeweils dieselbe Postsendung oder gar keine Postsendung.

Berücksichtigt wird die Tatsache, dass die Intensitätswerte von Reflexionseigenschaften der Oberfläche der Postsendung abhängen und daher von Postsendung zu Postsendung variieren können. Die Intensitätswerte einer Postsendung haben typischerweise den in Fig. 4 gezeigten glockenförmigen Verlauf. Bildpunkte mit großen Intensitätswerten stammen von der Unterkante einer Postsendung, andere Bildpunkte stammen von einer seitlichen Oberfläche.

In einer Ausgestaltung werden ein Schwellwert-Prozentsatz I_proz vorgegeben und ein maximaler Intensitätswert I_max[i] der Aufnahme Aufn[i] ermittelt. Eine Schwelle wird abhängig von I_max[i] und I_proz berechnet, vorzugsweise als I_max[i] * I_proz. Ermittelt werden der kleinste Index j3 und der größte Index j4 derjenigen Bildpunkte B[i,j] der Aufnahme Aufn[i], die von der Postsendung stammen und Intensitätswert größer als die Schwelle I_max[i] * I_proz haben.

Der Abstand zwischen zwei benachbarten Bildpunkten B[i,j] und B[i,j+1] beträgt D/N. Als Dicke der Postsendung wird daher der Näherungswert

$$\texttt{Dicke[i] = (j4 - j3) * D / N}$$

berechnet. Möglich ist, dieses Vorgehen für jede Aufnahme durchzuführen, die dieselbe Postsendung zeigt, wodurch für jede Aufnahme jeweils ein Dickenwert Dicke[i] berechnet wird. Als Dicke der Postsendung wird z. B. der maximale Dickenwert verwendet. Möglich ist auch, den mittleren Dickenwert der Aufnahmen zu verwenden.

Seien B[i,j(i,1)],...,B[i,j(i,N[i])] die N[i] lokalen Maxima in der Aufnahme Äufn[i].In einer bevorzugten Ausgestaltung wird als I_max[i] jeweils das lokale Maximum der Bildpunkte von einem Gegenstand verwendet, also ein Intensitätswert I[i,j(i,1)],..., I[i,j(i,N[i])] von den N(i) Gegenständen in der Aufnahme Aufn[i]. Es gibt N[i] lokale Maxima und demnach N[i] verschiedene Werte für I_max[i] bei der Auswertung der Aufnahme Aufn[i]. Die Berechnung liefert N[i] Näherungswerte für die Dicken der N[i] Gegenstände in der Aufnahme Aufn[i].

In einer anderen Ausgestaltung wird der jeweilige maximale Intensitätswerte I_max[i] der Intensitätswerte der Bildpunkte dieser Aufnahme Aufn[i] ermittelt. Also ist I_max[i] = max {I[i,1], I[i,N]} und zugleich gleich den größten lokalen Maximum für die Aufnahme Aufn[i].

Fig. 6 veranschaulicht, wie die Dicke der Postsendung Ps-2 näherungsweise gemäß der zweiten Ausgestaltung berechnet wird. Hierfür werden die Intensitätswerte von Fig. 4 verwendet.

An die Regelung, die Stellwerte für den Vereinzeler und den CFC-Transport vorgibt, werden vorzugsweise einige oder alle der folgenden gemessenen Werte jeder Postsendung übermittelt:

- die Länge der Postsendung,

- die Dicke der Postsendung,

- die Zeit, die ein Referenzpunkt der Postsendung benötigt, um den Schlitz BD zu passieren, wobei als Referenzpunkt z. B. die Vorderkante verwendet wird, und

- der Zeitpunkt, an dem ein Referenzpunkt der Postsendung den Schlitz BD erreicht, wobei als Referenzpunkt z. B. die Hinterkante verwendet wird.

Bezugszeichenliste

| Bezugszeichen | Bedeutung |
|---|---|
| α | Winkel der Schrägstellung einer Postsendung im Transportkanal F-1, F-2 |
| An-1 | Antrieb für den Transportkanal F-1 |
| An-2 | Antrieb für den Transportkanal F-2 |
| AE | datenverarbeitende Auswerteeinheit |
| Aufn[1], Aufn[2], ... | Abfolge der Aufnahmen, die die Kamera Ka durch den Schlitz BD erzeugt hat |
| B | Bildaufnahmerichtung |
| B[i,j(i,1)],..., B[i,j(i,N[i])] | lokale Maxima in der Aufnahme Aufn[i] (i = 1,2,...) |
| B[i,j] | Bildpunkt Nr. j der Aufnahme Aufn[i] (j=1,...,N) |
| BD | Schlitz zwischen den beiden Transportkanälen F1 und F2 |
| D | übereinstimmende Breite der beiden Transportkanäle F-1 und F-2 und zugleich Breite des Schlitzes BD |
| Δy | seitlicher Versatz zweier lokaler Maxima von derselben Postsendung in zwei aufeinander folgenden Aufnahmen |
| Δy-max | obere Schranke für den Seitenversatz zweier lokalen Maxima von derselben Postsendung in zwei aufeinander folgenden Aufnahmen |
| Δj-max | maximaler Index-Abstand zweier lokaler Maxima in zwei aufeinander folgenden Aufnahmen |
| Dicke [i] | Dicke einer Postsendung in der Aufnahme Aufn[i] |
| F-1, F-2 | Förder-Einrichtungen in Form eines U-förmigen Transportkanals |
| I[i,j] | Intensitätswert des Bildpunkts B[i,j] |
| I_max | maximaler Helligkeitswert einer Postsendung |
| I_min | vorgegebener unterer Schwellwert für die Entscheidung, ob ein Bildpunkt eine Postsendung zeigt oder nicht |
| I_proz | Prozent-Schwellwert, wird für die Ermittlung der Dicke einer Postsendung verwendet |
| I_0 | maximal möglicher Intensitätswert |
| Ka | Kamera |
| λ | Bildaufnahmefrequenz der Kamera K |
| Li | Lichtquelle |
| L-min | minimale Länge einer Postsendung gesehen in die Transportrichtung T |
| M | übereinstimmende Mittelachse der beiden Transportkanäle F-1, F-2 |
| L-min | Vorgegebene minimale Länge einer Postsendung |
| N | Anzahl der Bildaufnahme-Komponenten der Kamera Ka, zugleich Anzahl der Aufnahme-Komponenten (Bildpunkte) jeder Aufnahme Aufn [i] |
| N[i] | Anzahl der lokalen Maxima in der Aufnahme Aufn[i] (i=1,2, ...), zugleich Anzahl der Postsendungen, die in Aufn[i] gezeigt werden (N[i]>0) |
| Ps-1, Ps-2, ... | transportierte Postsendungen |
| Ref | Referenzpunkt |
| SF-1.1, SF-1.2 | seitliche Endlos-Förderbänder der Förder-Einrichtung F-1 |
| SF-2.1, SF-2.2 | seitliche Endlos-Förderbänder der Förder-Einrichtung F-2 |
| T | Transportrichtung, in die die Postsendungen Ps-1, ... transportiert werden |
| TG | Taktgeber, generiert einen Streckentakt |

(fortgesetzt)

| Bezugszeichen | Bedeutung |
|---|---|
| t[i] | Zeitpunkt, an dem die Kamera Ka durch den Schlitz BD hindurch die Aufnahme Aufn[i] erzeugt (i=1,2,...) |
| Tol | vorgegebene Längen-Toleranz |
| UF-1 | Unterflur-Förderband der Förder-Einrichtung F-1 |
| UF-2 | Unterflur-Förderband der Förder-Einrichtung F-2 |
| UK-a, UK-b | Unterkanten der Postsendungen Ps-a, Ps-b |
| v | übereinstimmende Transportgeschwindigkeit der beiden Förder-Einrichtungen F-1, F-2 |
| v-Soll | vorgegebene Transportgeschwindigkeit für die Transportkanäle F-1, F-2 |

**Patentansprüche**

1. Verfahrens zum Verändern einer Transportgeschwindigkeit, mit welcher eine Förder-Einrichtung (F-1, F-2) mehrere Gegenstände (Ps-1, Ps-2, Ps-3) transportiert,

wobei eine Förder-Einrichtung (F-1, F-2) die Gegenstände (Ps-1, Ps-2, Ps-3) mittels mindestens einer Transport-Komponente (UF-1, UF-2) transportiert,

jeder transportierte Gegenstand (Ps-1, Ps-2, Ps-3) während des Transports auf einer Transport-Komponente (UF-1, UF-2) der Förder-Einrichtung (F-1, F-2) liegt,

die Geschwindigkeit, mit welcher die Förder-Einrichtung (F-1, F-2) die Gegenstände (Ps-1, Ps-2, Ps-3) transportiert, mindestens einmal abhängig vom Ergebnis eines Mess-Schritts auf eine Soll-Transportgeschwindigkeit (v-Soll) eingestellt wird, und

jeder Mess-Schritt während des Transports durchgeführt wird und die Schritte umfasst, dass

- während des Transports zeitlich nacheinander mehrere Aufnahmen (Aufn[1], Aufn[2],...) von einem Ausschnitt (BD) der Förder-Einrichtung (F-1, F-2) dergestalt erzeugt werden, dass
- alle Aufnahmen (Aufn[1], Aufn[2],...) in dieselbe Bildaufnahmerichtung senkrecht oder schräg nach oben erzeugt werden und jeder Gegenstand (Ps-1, Ps-2, Ps-3) auf mindestens zwei Aufnahmen (Aufn[1], Aufn[2],...) abgebildet ist und
- jede Aufnahme (Aufn[i]) jeweils eine Abfolge von mehreren Aufnahme-Komponenten (B[i,1],...,B[i,N]) umfasst, und
- die Aufnahmen (Aufn[1], Auf[2]) ausgewertet werden,

**dadurch gekennzeichnet, dass** für jede Aufnahme (Aufn[1], Aufn[2],...) die Schritte durchgeführt werden, dass,

- geprüft wird, ob diese Aufnahme (Aufn[1], Aufn[2],...) mindestens einen Gegenstand zeigt und
- für jeden in der Aufnahme (Aufn[i]) gezeigten Gegenstand jeweils mindestens eine Aufnahme-Komponente (B[i,1],...,B[i,N]) dieser Aufnahme (Aufn[i]) ausgewählt wird, die von diesem Gegenstand stammt,

für jede Aufnahme (Aufn[i]) weiterhin der Schritt durchgeführt wird, dass

- für jede erste Aufnahme-Komponente (B[i,1],...,B[i,N]) dieser Aufnahme (Aufn[i]), die als von einem Gegenstand stammend ausgewählt wurde,
entweder mindestens eine zweite Aufnahme-Komponente einer zeitlichen nachfolgenden Aufnahme ermittelt wird, die ebenfalls als von einem Gegenstand stammend ausgewählt wurde und die von demselben Gegenstand wie die erste Aufnahme-Komponente stammt,
oder festgestellt wird, dass es in keiner nachfolgenden Aufnahme eine solche zweite Aufnahme-Komponente gibt,

alle ausgewählten Aufnahme-Komponenten ermittelt werden, die jeweils von demselben Gegenstand stammen und jeder Gegenstand, der in mindestens einer Aufnahme gezeigt wird, durch Auswertung aller ausgewählten Aufnahme-Komponenten, die als von diesem Gegenstand stammend ermittelt wurden, vermessen wird und
das Vermessungs-Ergebnis des Mess-Schritts dazu verwendet wird, um die Soll-Transportgeschwindigkeit (v_Soll) zu berechnen.

2.  Verfahren nach Anspruch 1,
    **dadurch gekennzeichnet, dass**
    die Förder-Einrichtung (F-1, F-2) die Gegenstände (Ps-1, Ps-2) so transportiert, dass sich die Gegenstände während des Transports zwischen zwei Seitenwänden (SF-1.1, SF-1.2, SF-2.1, SF-2.2) befinden,
    jeder Gegenstand sich - gesehen in die Transportrichtung (T) der Förder-Einrichtung (F-1, F-2) - in einer Gegenstands-Ebene erstreckt, und
    mindestens einer der folgenden Parameter jedes Gegenstands gemessen wird:

    - der Abstand des Gegenstands von einer Seitenwand (SF-1.1, SF-1.2, SF-2.1, SF-2.2) der Förder-Einrichtung (F-1, F-2).

3.  Verfahren nach Anspruch 1 oder Anspruch 2,
    **dadurch gekennzeichnet, dass**
    durch Analyse aller ausgewählten Aufnahme-Komponenten, die jeweils von demselben Gegenstand stammen, mindestens eine der folgenden Parameter dieses Gegenstands gemessen wird:

    - die Lage des Gegenstandes auf der Transport-Komponente (UF-1, UF-2) während des Transports durch die Förder-Einrichtung (F-1, F-2),

    - der Winkel ($\alpha$) zwischen der Längsrichtung des Gegenstands und der Transportrichtung (T) der Förder-Einrichtung (F-1, F-2),
    - die Ausdehnung des Gegenstandes in die Transportrichtung (T), in welche der Gegenstand transportiert wird,
    - der Abstand zwischen einer Vorderkante und einer Hinterkante des Gegenstands,
    - die Dicke des Gegenstands,
    - die Länge des Gegenstandes.

4.  Verfahren nach Anspruch 3,
    **dadurch gekennzeichnet, dass**
    die Auswerteeinheit (AE)

    - einen Streckenzug oder einen Kurvenzug durch alle ausgewählten Aufnahme-Komponenten von demselben Gegenstand legt und
    - die Länge dieses Streckenzugs oder Kurvenzugs berechnet und

    diese Länge als die Länge dieses Gegenstands verwendet wird.

5.  Verfahren nach einem der Ansprüche 1 bis 3,
    **dadurch gekennzeichnet, dass**
    die Förder-Einrichtung (F-1, F-2) zwei Förder-Komponenten in Form von zwei Unterflur-Förderbändern (UF-1, UF-2) umfasst,
    zwischen den beiden Unterflur-Förderbändern (UF-1, UF-2) ein Schlitz (BD) vorhanden ist,
    jeder Gegenstand (Ps-1, Ps-2,...) während des Transports stets wenigstens teilweise auf mindestens einem Unterflur-Förderband (UF-1, UF-2) liegt und über den Schlitz (BD) hinweg transportiert wird und
    die Aufnahmen Aufn[1], Aufn[2].,... von unten durch den Schlitz (BD) hindurch erzeugt werden.

6.  Verfahren nach einem der Ansprüche 1 bis 5,
    **dadurch gekennzeichnet, dass**
    für jede Aufnahme (Aufn[i]) und jede erste Aufnahme-Komponente (B[i,1],..., B[i,N]) dieser Aufnahme (Aufn[i]), die als von einem Gegenstand stammend ausgewählt wird,
    nach einer zweiten ausgewählten Aufnahme-Komponente (B[i+1,1],..., B[i+1,N]) in der zeitlichen unmittelbar nachfolgenden Aufnahme (Aufn[i+1]) gesucht wird, und dann, wenn in der unmittelbaren nachfolgenden Aufnahme (Aufn[i+1]) keine solche ausgewählte Aufnahme-Komponente gefunden wird,
    entschieden wird, dass es in keiner nachfolgenden Aufnahme eine solche ausgewählte Aufnahme-Komponente gibt.

7.  Verfahren nach einem der Ansprüche 1 bis 6,

**dadurch gekennzeichnet, dass**

- jede Aufnahme-Komponente (B[i,j]) durch einen Intensitätswert (I[i,j]) gekennzeichnet ist,
- eine Abfolge von Intensitätswerten aus der Abfolge von Aufnahme-Komponenten (B[i,1], ..., B[i,N]) einer Aufnahme (Aufn[i]) und den Intensitätswerten I[i,1], ..., I[i,N]) dieser Aufnahme-Komponenten (B[i,1], ..., B[i,N]) gebildet wird,
- die Anzahl (N[i]) von lokalen Maxima in der Intensitätswerte-Abfolge der Aufnahme (Aufn[i]) ermittelt und als Anzahl von verschiedenen Gegenständen verwendet wird und
- jede Aufnahme-Komponente, die ein lokales Maximum als Intensitätswert aufweist, als von einem Gegenstand stammend ausgewählt wird.

8. Verfahren nach Anspruch 7,
   **dadurch gekennzeichnet, dass**
   ein Minimal-Intensitätswert (I_min) vorgegeben wird und bei der Ermittlung der lokalen Maxima nur solche Bildpunkte berücksichtigt werden, deren Intensitätswerte größer oder gleich des Minimal-Intensitätswerts (I_min) sind.

9. Verfahren nach einem der Ansprüche 1 bis 8,
   **dadurch gekennzeichnet, dass**

   - jeder transportierter Gegenstand sich - gesehen in die Transportrichtung (T) der Förder-Einrichtung (F-1, F-2) in eine Längsrichtung erstreckt,
   - abhängig von der Geometrie der Förder-Einrichtung (F-1, F-2) und einer vorgegebenen minimalen Länge eines Gegenstands in die Längsrichtung ein maximaler Winkel zwischen der Längsrichtung eines transportierten Gegenstands und der Transportrichtung (T) hergeleitet wird und
   - der maximale Winkel bei der Ermittlung einer zweiten Aufnahme-Komponente von demselben Gegenstand verwendet wird.

10. Verfahren nach einem der Ansprüche 1 bis 9,
    **dadurch gekennzeichnet, dass**
    zusätzlich gezählt wird, wie viele verschiedene Gegenstände insgesamt in den Aufnahmen gezeigt werden, wobei das Zählen den Schritt umfasst, dass gezählt wird, von wie vielen verschiedenen Gegenständen die ausgewählten Komponenten insgesamt stammen.

11. Verfahren nach einem der Ansprüche 1 bis 10,
    **dadurch gekennzeichnet, dass**
    die maximale Ausdehnung des Gegenstands in einer Projektionsebene, die senkrecht auf der Bildaufnahmerichtung (B) steht, ermittelt wird und
    der Schritt, die maximale Ausdehnung eines Gegenstands zu ermitteln, die Schritte umfasst, dass

    - durch Vergleich der Aufnahme-Komponenten eine Linie ermittelt wird, die die Projektion des Gegenstands in die Projektionsebene beschreibt, und
    - die Länge dieser Linie berechnet und als maximale Ausdehnung des Gegenstands verwendet wird.

12. Verfahren nach einem der Ansprüche 1 bis 11,
    **dadurch gekennzeichnet, dass**
    ein Bildaufnahmegerät (Ka) die Aufnahme (Aufn[1], Aufn[2],...) mit einer steuerbaren Bildaufnahmefrequenz ($\lambda$) erzeugt,
    die Transportgeschwindigkeit (v), mit der die Förder-Einrichtung (F-1, F-2) die Gegenstände transportiert, gemessen oder auf einen vorgegebenen Wert eingestellt wird und
    das Bildaufnahmegerät (Ka) so angesteuert wird, dass die Bildaufnahmefrequenz ($\lambda$) proportional zur gemessenen oder eingestellten Transportgeschwindigkeit (v) ist.

13. Verfahren nach einem der Ansprüche 1 bis 12,
    **dadurch gekennzeichnet, dass**

    - die Förder-Einrichtung (F-1, F-2) einen Kanal mit zwei Seitenwänden (SF-1.1, SF-1.2, SF-2.1, SF-2.2) umfasst, wobei die Seitenwände (SF-1.1, SF-1.2, SF-2.1, SF-2.2) sich parallel zur Transportrichtung (T) erstrecken, und
    - die Aufnahmen (Aufn[1], Aufn[2], ...) dergestalt erzeugt werden,

dass der in den Aufnahmen (Aufn[1], Aufn[2], ...) abgebildete Ausschnitt (BD) der Förder-Einrichtung (F-1, F-2) sich von der einen Seitenwand (SF-1.1, SF-1.2) zu der anderen Seitenwand (SF-2.1, SF-2.2) erstreckt.

**14.** Verfahren nach einem der Ansprüche 1 bis 13,
**dadurch gekennzeichnet, dass**
das Erzeugen der Aufnahmen (Aufn[1], Aufn[2], ...) die Schritte umfasst, dass

- Licht in die Bildaufnahmerichtung (B) ausgestrahlt wird und
- die von den transportierten Gegenständen (Ps-1, Ps-2, ...) erzeugten Reflektionen des ausgestrahlten Lichts erfasst werden.

**15.** Verfahren nach einem der Ansprüche 1 bis 14,
**dadurch gekennzeichnet, dass**
die Auswertung der Aufnahmen (Aufn[1], Aufn[2], ...) den zusätzlichen Schritt umfasst,
dass gezählt wird, wie viele transportierte Gegenstände (Ps-1, Ps-2, ...) in einer vorgegebenen Zeitspanne den Ausschnitt der Förderstrecke (F-1, F-2) passieren.

**16.** Verfahren zum Transportieren von Gegenständen (Pa-1, Ps-2), Ps-3),
wobei das Verfahren die Schritte umfasst, dass eine Förder-Einrichtung (F-1, F-2) die Gegenstände (Ps-1, Ps-2, Ps-3) mittels mindestens einer Transport-Komponente (UF-1, UF-2) transportiert,
jeder transportierte Gegenstand (Ps-1, Ps-2, Ps-3) während des Transports auf einer Transport-Komponente (UF-1, UF-2) liegt und
die Geschwindigkeit, mit der die Förder-Einrichtung (F-1, F-2) die Gegenstände transportiert, mindestens einmal durch Anwendung des Verfahrens nach einem der Ansprüche 1 bis 15 auf die berechnete Soll-Transportgeschwindigkeit (V-Soll) eingestellt wird.

**17.** Vorrichtung zum Verändern einer Transportgeschwindigkeit,
mit welcher eine Förder-Einrichtung (F-1, F-2) mehrere Gegenstände (Ps-1, Ps-2, Ps-3) transportiert,
wobei die Förder-Einrichtung (F-1, F-2)

- mindestens eine Transport-Komponente (UF-1, UF-2) und
- einen Antrieb (An-1, An-2) für die Transport-Komponente (UF-1, UF-2)

aufweist und
die Förder-Einrichtung (F-1, F-2) dazu ausgestaltet ist, jeden auf einer Transport-Komponente (UF-1, UF-2) liegenden Gegenstand (Ps-1, Ps-2, Ps-3) mit einer veränderbaren Transportgeschwindigkeit zu transportieren,
die Veränderungs-Vorrichtung

- einen Regler (Re),
- ein Bildaufnahmegerät (Ka) und
- eine Auswerteeinheit (AE)

umfasst,

- das Bildaufnahmegerät (Ka) dazu ausgestaltet ist, während des Transports mehrere Aufnahmen (Aufn[1], Aufn[2], ...) von einem Ausschnitt (BD) der Förder-Einrichtung (F-1, F-2) dergestalt zu erzeugen,
dass das Bildaufnahmegerät (Ka) alle Aufnahmen (Aufn[1], Aufn[2], ...) in dieselbe Bildaufnahmerichtung (B) senkrecht oder schräg nach oben erzeugt, und
- die Auswerteeinheit (AE) dazu ausgestaltet ist, diese Aufnahmen (Aufn[1], Aufn[2], ...) auszuwerten,

wobei das Bildaufnahmegerät (Ka) dazu ausgestaltet ist, die Aufnahmen (Aufn[1], Aufn[2], ...) dergestalt zu erzeugen, dass

- jede Aufnahme (Aufn[1], Aufn[2], ...) mehrere Aufnahme-Komponenten umfasst und
- jeder Gegenstand auf mindestens zwei Aufnahmen (Aufn[1], Aufn[2], ...) abgebildet ist, und

die Auswerteeinheit (AE) dazu ausgestaltet ist, die Aufnahmen (Aufn[1] Aufn[2],...) auszuwerten,
wobei die Auswerteeinheit (AE) dazu ausgestaltet ist,

für jede Aufnahme (Aufn[1], Aufn[2], ...) die Schritte durchzuführen,

- zu prüfen, ob diese Aufnahme )Aufn[1], Aufn[2],...) mindestens ein Gegenstand zeigt und
- für jeden in der Aufnahme (Aufn[i]) gezeigten Gegenstand jeweils mindestens eine Aufnahme-Komponente (B[i,1], B[i,N]) dieser Aufnahme (Aufn[i]) auszuwählen, die von diesem Gegenstand stammt,

die Auswerteeinheit (AE) weiterhin dazu ausgestaltet ist, für jede Aufnahme (Aufn[i]) den Schritt durchzuführen:

für jede erste Aufnahme-Komponente (B[i,1],...,B[i,N]) dieser Aufnahme (Aufn[i]) die als von einem Gegenstand stammend ausgewählt wurde
entweder mindestens eine zweite Aufnahme-Komponente einer zeitlich nachfolgenden Aufnahme (Aufn[i]) zu ermitteln, die ebenfalls als von einem Gegenstand stammend ausgewählt wurde und die von demselben Gegenstand wie die erste Aufnahme-Komponente (Aufn[i]) stammt,
oder festzustellen, dass es in keiner nachfolgenden Aufnahme (Aufn[i+1]) eine solche zweite Aufnahme-Komponente gibt,
die Auswerteeinheit (AE) weiterhin dazu ausgestaltet ist,

- alle ausgewählten Aufnahme-Komponenten zu ermitteln, die jeweils von demselben Gegenstand stammen und
- jeden Gegenstand (Ps-1, Ps-2, Ps-3), der in mindestens einer Aufnahme gezeigt wird, durch Auswertung aller ausgewählten Aufnahme-Komponenten als von diesem Gegenstand stammend ermittelt wurden, zu vermessen, und

der Regler (Re) dazu ausgestaltet ist,

- den Antrieb (An-1, An-2) abhängig vom Vermessungs-Ergebnis der Auswerteeinheit (AE) eine Soll-Transportgeschwindigkeit zu berechnen und
- den Antrieb (An-1, An-2) dergestalt anzusteuern, dass der Antrieb jede Transport-Komponente (UF-1, UF-2) mit der Soll-Transportgeschwindigkeit (v-Soll) bewegt.

18. Anordnung zum Transport mehrerer flacher Gegenstände (Ps-1, Ps-2, ...), wobei die Anordnung

- eine Förder-Einrichtung (F-1, F-2) und
- eine Veränderungs-Vorrichtung gemäß Anspruch 17 umfasst,

die Förder-Einrichtung (F-1, F-2)

- mindestens eine Transport-Komponente (UF-1, UF-2) und
- einen Antrieb (An-1- An-2) für die Transport-Komponente (UF-1, UF-2)

aufweist und
der Regler (Re) der Veränderungs-Vorrichtung dazu ausgestaltet ist, den Antrieb (An-1, An-2) abhängig von den Vermessungs-Ergebnissen anzusteuern.

19. Transportvorrichtung nach Anspruch 18,
**dadurch gekennzeichnet, dass**

- die Tränsportvorrichtung zwei Förder-Einrichtungen (F-1, F-2) aufweist, zwischen denen ein Schlitz (BD) vorhanden ist,
- die Transportvorrichtung dazu ausgestaltet ist, jeden Gegenstand (Ps-1, Ps-2, ...) über den Schlitz (BD) hinweg zu transportieren, und
- das Bildaufnahmegerät (Ka) dazu ausgestaltet ist, die Aufnahmen (Aufn[1], Aufn[2], ...) durch den Schlitz (BD) hindurch zu erzeugen.

20. Transportvorrichtung nach Anspruch 18 oder Anspruch 19, **dadurch gekennzeichnet, dass**

- die Förder-Einrichtung (F-1, F-2) einen Kanal mit zwei Begrenzungswänden umfasst,

wobei die Begrenzungswände sich parallel zur Transportrichtung (T) erstrecken, und
- das Bildaufnahmegerät (Ka) dazu ausgestaltet ist, die Aufnahmen (Aufn[1], Aufn[2], ...) dergestalt zu erzeugen,
- dass der in den Aufnahmen (Aufn[1], Aufn[2], ...) abgebildete Ausschnitt (BD) der Förder-Einrichtung (F-1, F-2) sich von der einen Seitenwand zu der anderen Seitenwand erstreckt.

**Claims**

1. Method for changing a transport speed, at which a conveying apparatus (F-1, F-2) transports a number of objects (Ps-1, Ps-2, Ps-3),
   wherein a conveying apparatus (F-1, F-2) transports the objects (Ps-1, Ps-2, Ps-3) by means of at least one transport component (UF-1, UF-2),
   each transported object (Ps-1, Ps-2, Ps-3) rests on a transport component (UF-1, UF-2) of the conveying apparatus (F-1, F-2) during the transport,
   the speed at which the conveying apparatus (F-1, F-2) transports the objects (Ps-1, Ps-3, Ps-3) is adjusted to a target transport speed (v-target) at least once as a function of the result of a measuring step, and
   each measuring step is performed during the transport and comprises the steps that

   - during the transport, a number of recordings (Rec[1], Rec[2],...) of a section (BD) of the conveying apparatus (F-1, F-2) are generated one after the other in time such that
   - all recordings (Rec[1], Rec[2],...) in the same image recording direction are generated vertically or obliquely upwards and each object (Ps-1, Ps-2, Ps-3) is mapped on at least two recordings (Rec[1], Rec[2],...) and
   - each recording (Rec[i]) comprises a sequence of a number of recording components (B[i,1],...,B[i,N]) in each case, and
   - the recordings (Rec[1], Rec[2]) are evaluated, **characterised in that**

   for each recording (Rec[1], Rec[2],...), the steps are performed that,

   - a check is carried out to determine whether this recording (Rec[1], Rec[2],...) shows at least one object, and
   - for each object shown in the recording (Rec[i]), at least one recording component (B[i,1],...,B[i,N]) of this recording (Rec[i]) which originates from this object, is selected in each case,

   for each recording (Rec[i]), the step is also performed that

   - for each first recording component (B[i,1],...,B[i,N]) of this recording (Rec[i]), which was selected as originating from an object,
   either at least a second recording component of a following recording in time is determined, which was likewise selected as originating from an object and which originates from the same object as the first recording component,
   or it is specified that such a second recording component is not present in any following recording,

   all selected recording components which originate from the same object in each case are determined and
   each object which is shown in at least one recording is measured by evaluating all selected recording components which were determined as originating from this object and
   the measuring result of the measuring step is used to calculate the target transport speed (v_target).

2. Method according to claim 1,
   **characterised in that**
   the conveying apparatus (F-1, F-2) transports the objects (Ps-1, Ps-2) such that the objects are disposed between two side walls (SF-1.1, SF-1.2, SF-2.1, SF-2.2) during the transport,
   each object, viewed in the transport direction (T) of the conveying apparatus (F-1, F-2), extends in an object plane, and
   at least one of the following parameters of each object is measured:

   - the distance of the object from a side wall (SF-1.1, SF-1.2, SF-2.1, SF-2.2) of the conveying apparatus (F-1, F-2).

3. Method according to claim 1 or claim 2,
   **characterised in that**
   by analysing all selected recording components, which originate from the same object in each case,
   at least one of the following parameters of this object is measured:

- the position of the object on the transport component (UF-1, UF-2) during the transport by the conveying apparatus (F-1, F-2),

  - the angle ($\alpha$) between the longitudinal direction of the object and the transport direction (T) of the conveying apparatus (F-1, F-2),
  - the extension of the object in the transport direction (T), in which the object is transported,
  - the distance between a front edge and a rear edge of the object,
  - the thickness of the object,
  - the length of the object.

**4.** Method according to claim 3,
**characterised in that**
the evaluation unit (AE)

  - lays a polygon or a curvature through all selected recording components of the same object and
  - calculates the length of this polygon or curvature and this length is used as the length of this object.

**5.** Method according to one of claims 1 to 3, **characterised in that**
the conveying apparatus (F-1, F-2) comprises two conveying components in the form of two underfloor conveyor belts (UF-1, UF-2),
a slot (BD) exists between the two underfloor conveyor belts (UF-1, UF-2),
each object (Ps-1, Ps-2,...) is always disposed at least partially on at least one underfloor conveyor belt (UF-1, UF-2) during the transport and is transported past the slot (BD) and
the recordings Rec[1], Auf[2],... are generated from below through the slot (BD).

**6.** Method according to one of claims 1 to 5, **characterised in that**
for each recording (Rec[i]) and each first recording component (B[i,1],...,B[i,N]) of this recording (Rec[i]), which is selected as originating from an object,
a second selected recording component (B[i+l,l],..., B[i+1,N]) is sought in the recording (Rec[i+1]) following immediately in time, and
then if no such selected recording component is found in the immediately following recording (Rec[i+1]),
a decision is made that such a selected recording component is not present in any following recording.

**7.** Method according to one of claims 1 to 6, **characterised in that**

  - each recording component (B[i,j]) is **characterised by** an intensity value (I[i,j]),
  - a sequence of intensity values is formed from the sequence of recording components (B[i,1], B[i,N]) of a recording (Rec[i]) and the intensity values I[i,1], ..., I[i,N]) of these recording components (B[i,1], ..., B[i,N]),
  - the number (N[i]) of local maxima in the intensity value sequence of recording (Rec[i]) is determined and is used as a number of different objects and
  - each recording component, which has a local maximum as an intensity value, is selected as originating from an object.

**8.** Method according to claim 7,
**characterised in that**
a minimum intensity value (I_min) is predetermined and with the determination of the local maxima only such pixels are taken into consideration, whose intensity values are greater than or equal to the minimum intensity value (I_min).

**9.** Method according to one of claims 1 to 8,
**characterised in that**

  - each transported object, viewed in the transport direction (T) of the conveying apparatus (F-1, F-2), extends in a longitudinal direction,
  - a maximum angle between the longitudinal direction of a transported object and the transport direction (T) is deduced as a function of the geometry of the conveying apparatus (F-1, F-2) and a predetermined minimum length of an object in the longitudinal direction and
  - the maximum angle is used when a second recording component is determined from the same object.

**10.** Method according to one of claims 1 to 9,
**characterised in that**
how many different objects are shown overall in the recordings is additionally counted,
wherein the counting comprises the step of counting from how many different objects the selected components originate overall.

**11.** Method according to one of claims 1 to 10,
**characterised in that**
the maximum extension of the object in a projection plane, which is vertical to the image recording direction (B), is determined and
the step to determine the maximum extension of an object, which comprises the steps that

- a line is determined, by comparing the recording components, which describes the projection of the object in the projection plane, and
- the length of this line is calculated and used as the maximum extension of the object.

**12.** Method according to one of claims 1 to 11,
**characterised in that**
an image recording device (Ka) generates the recording (Rec[1], Rec[2],...) with a controllable image recording frequency (X),
the transport speed (v), at which the conveying apparatus (F-1, F-2) transports the objects is measured or set to a predetermined value and
the image recording device (Ka) is actuated such that the image recording frequency ($\lambda$) is proportional to the measured or adjusted transport speed (v).

**13.** Method according to one of claims 1 to 12,
**characterised in that**

- the conveying apparatus (F-1, F-2) comprises a channel with two side walls (SF-1.1, SF-l.2, SF-2.1, SF-2.2),

wherein the side walls (SF-1.1, SF-1.2, SF-2.1, SF-2.2) extend in parallel to the transport direction (T), and

- the recordings (Rec[1], Rec[2], ...) are generated such that,

the section (BD) of the conveying apparatus (F-1, F2) mapped in the recordings (Rec[1], Rec[2], ...) extends from the one side wall (SF-1.1, SF-1.2) to the other side wall (SF-2.1, SF-2.2).

**14.** Method according to one of claims 1 to 13, **characterised in that**
the generation of the recordings (Rec[1], Rec[2], ...) comprises the steps that

- light is emitted into the image recording direction (B) and
- the reflections of the emitted light generated by the transported objects (Ps-1, Ps-2, ...) are detected.

**15.** Method according to one of claims 1 to 14, **characterised in that**
the evaluation of the recordings (Rec[1], Rec[2], ...) comprises the additional step,
that how many transported objects (Ps-1, Ps-2, ...) pass through the section of the conveyor line (F-1, F-2) in a predetermined period of time is counted.

**16.** Method for transporting objects (Pa-1, Ps-2), Ps-3),
wherein the method comprises the steps that
a conveying apparatus (F-1, F-2) transports the objects (Ps-1, Ps-2, Ps-3) by means of at least one transport component (UF-1, UF-2),
each transported object (Ps-1, Ps-2, Ps-3) is disposed on a transport component (UF-1, UF-2) during the transport and the speed at which the conveying apparatus (F1, F-2) transports the objects is adjusted at least once to the calculated target transport speed (v-target) by applying the method according to one of claims 1 to 15.

**17.** Device for changing a transport speed,
at which a conveying apparatus (F-1, F-2) transports a number of objects (Ps-1, Ps-2, Ps-3),

wherein the conveying apparatus (F-1, F-2)

- has at least one transport component (UF-1, UF-2) and
- a drive (An-1, An-2) for the transport component (UF-1, UF-2)

and
the conveying apparatus (F-1, F-2) is embodied
to transport each object (Ps-1, Ps-2, Ps-3) disposed on a transport component (UF-1, UF-2) at a changeable transport speed,
the change device comprises

- a regulator (Re),
- an image recording device (Ka) and
- an evaluation unit (AE),
- the image recording device (Ka) is embodied to generate a number of recordings (Rec[1], Rec[2], ...) of a section (BD) of the conveying apparatus (F-1, F-2) during the transport,

the image recording device (Ka) generates all recordings (Rec[1], Rec[2], ...) in the same image recording direction (B) vertically or obliquely upwards, and

- the evaluation unit (AE) is embodied to evaluate these recordings (Rec[1], Rec[2], ...),

wherein the image recording device (Ka) is embodied to generate the recordings (Rec[1], Rec[2], ...) such that

- each recording (Rec[1], Rec[2], ...) comprises a number of recording components and
- each object is mapped onto at least two recordings (Rec[1], Rec[2], ...), and

the evaluation unit (AE) is embodied to evaluate the recordings (Rec[1], Rec[2], ...),
wherein the evaluation unit (AE) is embodied,

to perform the steps for each recording (Rec[1], Rec[2], ...),

- to check whether this recording (Rec[1], Rec[2],...) shows at least one object and
- for each object shown in the recording (Rec[i]), to select in each case at least one recording component (B[i,1], B[i,N]) of this recording (Rec[i]) which originates from this object,

the evaluation unit (AE) is further embodied to perform the step for each recording (Rec[i]):

for each first recording component (B[i,1],...,B[i,N]) of this recording (Rec[i]), which was selected as originating from an object
either to determine at least a second recording component of a following recording in time, which was likewise selected as originating from an object and which originates from the same object as the first recording component (Rec[i]),
or to specify that such a second recording component is not present in any following recording (Rec[i+1]),

the evaluation unit (AE) is also embodied,

- to determine all selected recording components, which originate in each case from the same object and
- to measure each object (Ps-1, Ps-2, Ps-3), which is shown in at least one recording, by evaluating all selected recording components as having been determined originating from this object, and

the regulator (Re) is embodied,

- to calculate a target transport speed for the drive (An-1, An-2) as a function of the measuring result of the evaluation unit (AE)
- to actuate the drive (An-1, An-2) such that the drive moves each transport component (UF-1, UF-2) at the target transport speed (v-target).

**18.** Arrangement for the transport of a number of flat objects (Ps-1, Ps-2, ...), wherein the arrangement

- comprises a conveying apparatus (F-1, F-2) and
- a change device according to claim 17,

the conveying apparatus (F-1, F-2) has

- at least one transport component (UF-1, UF-2) and
- a drive (An-1, An-2) for the transport component (UF-1, UF-2)

and
the regulator (Re) of the change device is embodied to actuate the drive (An-1, An-2) as a function of the measuring results.

**19.** Transport device according to claim 18, **characterised in that**

- the transport device has two conveying apparatuses (F-1, F-2), between which a slot (BD) exists,
- the transport device is embodied to transport each object (Ps=1, Ps-2, ...) past the slot (BD) and
- the image recording device (Ka) is embodied to generate the recordings (Rec[1], Rec[2], ...) through the slot (BD).

**20.** Transport device according to claim 18 or claim 19, **characterised in that**

- the conveying apparatus (F-1, F-2) comprises a channel with two surrounding walls,

wherein the surrounding walls extend in parallel to the transport direction (T), and

- the image recording device (Ka) is embodied to generate the recordings (Rec[1], Rec[2], ...) such that
- the section (BD) of the conveying apparatus (F-1, F2) mapped in the recordings (Rec[1], Rec[2], ...) extends from the one side wall to the other side wall.


**Revendications**

**1.** Procédé pour la modification d'une vitesse de transport avec laquelle une installation de convoyage (F-1, F-2) transporte plusieurs objets (Ps-1, Ps-2, Ps-3),
une installation de convoyage (F-1, F-2) transportant les objets (Ps-1, Ps-2, Ps-3) au moyen d'au moins un élément de transport (UF-1, UF-2),
chaque objet transporté (Ps-1, Ps-2, Ps-3) reposant pendant le transport sur un élément de transport (UF-1, UF-2) de l'installation de convoyage (F-1, F-2),
la vitesse avec laquelle l'installation de convoyage (F-1, F-2) transporte les objets (Ps-1, Ps-2, Ps-3) étant ajustée au moins une fois en fonction du résultat d'une étape de mesure sur une vitesse de transport de consigne (v-Soll), et
chaque étape de mesure étant effectuée pendant le transport, et comprenant les étapes consistant en ce que :

- pendant le transport, plusieurs prises de vue (Aufn [1], Aufn [2], ...) se suivant dans le temps sont produites à partir d'une section (BD) de l'installation de convoyage (F-1, F-2) de telle sorte que
- toutes les prises de vue (Aufn [1], Aufn [2], ...) soient produites dans la même direction de prise de vue, verticalement ou en oblique vers le haut, et chaque objet (Ps-1, Ps-2, Ps-3) soit représenté par au moins deux prises de vue (Aufn [1], Aufn [2], ...) et
- chaque prise de vue (Aufn [i]) comprend à chaque fois une série de plusieurs éléments de prise de vue (B [i, 1], ..., B [i, N]), et
- les prises de vue (Aufn [1], Aufn [2]) sont évaluées, **caractérisé en ce que**

pour chaque prise de vue (Aufn [1], Aufn [2], ...) on effectue les étapes consistant **en ce que**

- il est vérifié si cette prise de vue (Aufn [1], Aufn [2], ...) montre au moins un objet et

- pour chaque objet montré dans la prise de vue (Aufn [i]), au moins un élément de prise de vue (B [i, 1], ..., B [i, N]) de cette prise de vue (Aufn [i]) en provenance de cet objet est sélectionné,

pour chaque prise de vue (Aufn [i]), on effectue en outre l'étape consistant **en ce que**

- pour chaque premier élément de prise de vue (B [i, 1], ..., B [i, N]) de cette prise de vue (Aufn [i]) qui a été sélectionné comme provenant d'un objet, soit au moins un deuxième élément de prise de vue d'une prise de vue suivante dans le temps est identifié, lequel a éventuellement été sélectionné comme provenant d'un objet et provient du même objet que le premier élément de prise de vue, soit il est constaté qu'il n'y a dans aucune prise de vue suivante un tel deuxième élément de prise de vue,

tous les éléments de prise de vue sélectionnés sont identifiés comme provenant tous du même objet, et chaque objet qui est montré dans au moins une prise de vue est mesuré par évaluation de tous les éléments de prise de vue sélectionnés qui ont été identifiés comme provenant de cet objet, et

le résultat de la mesure de l'étape de mesure est utilisé pour calculer la vitesse de transport de consigne (v-Soll).

2. Procédé selon la revendication 1,
   **caractérisé en ce que**
   l'installation de convoyage (F-1, F-2) transporte les objets (Ps-1, Ps-2) de sorte que pendant le transport les objets se trouvent entre deux parois latérales (SF-1.1, SF-1.2, SF-2.1, SF-2.2),
   chaque objet - vu dans la direction de transport (T) de l'installation de convoyage (F-1, F-2) - s'étend dans un plan d'objet, et
   au moins un des paramètres suivants de chaque objet est mesuré :

   la distance entre l'objet et une paroi latérale (SF-1.1, SF-1.2, SF-2.1, SF-2.2) de l'installation de convoyage (F-1, F-2).

3. Procédé selon la revendication 1 ou la revendication 2, **caractérisé en ce que**
   par analyse de tous les éléments de prise de vue sélectionnés qui proviennent chacun du même objet,
   au moins un des paramètres suivants de cet objet est mesuré :

   - la position de l'objet sur les éléments de transport (UF-1, UF-2) pendant le transport par l'installation de convoyage (F-1, F-2),
   - l'angle ($\alpha$) entre la direction longitudinale de l'objet et la direction de transport (T) de l'installation de convoyage (F-1, F-2),
   - l'extension de l'objet dans la direction de transport (T) dans laquelle l'objet est transporté,
   - la distance entre un bord antérieur et un bord postérieur de l'objet,
   - l'épaisseur de l'objet,
   - la longueur de l'objet.

4. Procédé selon la revendication 3,
   **caractérisé en ce que**
   l'unité d'évaluation (AE)

   - détermine un tracé segmenté ou un tracé courbé à partir de tous les éléments de prise de vue sélectionnés du même objet et
   - calcule la longueur de ce tracé segmenté ou de ce tracé courbé et

   cette longueur est utilisée comme longueur de cet objet.

5. Procédé selon l'une des revendications 1 à 3, **caractérisé en ce que**
   l'installation de convoyage (F-1, F-2) comprend deux éléments de convoyage sous la forme de deux bandes de convoyage en sous-plancher (UF-1, UF-2),
   une fente (BD) est prévue entre les deux bandes de convoyage en sous-plancher (UF-1, UF-2),
   chaque objet (Ps-1, Ps-2, ...) repose pendant le transport constamment et au moins en partie sur au moins une bande de convoyage en sous-plancher (UF-1, UF-2), et est transporté au-delà de la fente (BD) et
   les prises de vue (Aufn [1], Aufn [2], ...) sont produites par le dessous à travers la fente (BD).

6. Procédé selon l'une des revendications 1 à 5, **caractérisé en ce que**
pour chaque prise de vue (Aufn [i]) et chaque premier élément de prise de vue (B [i, 1], ..., B [i, N]) de cette prise de vue (Aufn [i]), qui est sélectionné comme provenant d'un objet,
on recherche un deuxième élément de prise de vue (B [i+1, 1], ..., B [i+1, N]) sélectionné dans les prises de vue (Aufn [i+1]) immédiatement suivantes dans le temps, et ensuite, quand il n'est trouvé aucun élément de prise de vue sélectionné tel dans la prise de vue immédiatement suivante (Aufn [i+1]),
il est décidé que dans aucune prise de vue suivante ne se trouve un tel élément de prise de vue sélectionné.

7. Procédé selon l'une des revendications 1 à 6, **caractérisé en ce que**

- chaque élément de prise de vue (B [i, j]) est **caractérisé par** une valeur d'intensité (I [i, j]),
- une série de valeurs d'intensité est constituée à partir de la série d'éléments de prise de vue (B [i, 1], ..., B [i, N]) d'une prise de vue (Aufn [i]) et des valeurs d'intensité (I [i, 1], ..., I [i, N]) de ces éléments de prise de vue (B [i, 1], ..., B [i, N]),
- le nombre (N [i]) de maxima locaux dans la série de valeurs d'intensité de la prise de vue (Aufn [i]) est déterminé et est utilisé comme nombre d'objets différents et
- chaque élément de prise de vue qui comprend un maximum local comme valeur d'intensité est sélectionné comme provenant d'un objet.

8. Procédé selon la revendication 7,
**caractérisé en ce que**
une valeur d'intensité minimale (I_min) est prédéfinie et lors de l'identification des maxima locaux on ne considère que les points de vue dont les valeurs d'intensité sont supérieures ou égales à la valeur d'intensité minimale (I_min).

9. Procédé selon l'une des revendications 1 à 8, **caractérisé en ce que**

- chaque objet transporté - vu dans la direction de transport (T) de l'installation de convoyage (F-1, F-2)

  - s'étend dans une direction longitudinale,

- en fonction de la géométrie de l'installation de convoyage (F-1, F-2) et d'une longueur minimale prédéfinie d'un objet dans la direction longitudinale, un angle maximal entre la direction longitudinale d'un objet transporté et la direction de transport (T) est déduit et
- l'angle maximal est utilisé lors de l'identification d'un deuxième élément de prise de vue du même objet.

10. Procédé selon l'une des revendications 1 à 9, **caractérisé en ce que**
on compte en outre combien d'objets différents sont montrés au total dans les prises de vue,
le comptage comprenant l'étape consistant à compter de combien d'objets différents les éléments sélectionnés proviennent au total.

11. Procédé selon l'une des revendications 1 à 10, **caractérisé en ce que**
l'extension maximale de l'objet dans un plan de projection qui est perpendiculaire à la direction de prise de vue (B) est déterminée et
l'étape consistant à déterminer l'extension maximale d'un objet comprend les étapes consistant **en ce que** :

- par comparaison des éléments de prise de vue, une ligne qui décrit la projection de l'objet dans le plan de projection est déterminée, et
- la longueur de cette ligne est calculée et est utilisée comme extension maximale de l'objet.

12. Procédé selon l'une des revendications 1 à 11, **caractérisé en ce que**
un appareil de prise de vue (Ka) produit les prises de vue (Aufn [1], Aufn [2], ...) avec une fréquence de prise de vue ajustable ($\lambda$),
la vitesse de transport (v) avec laquelle l'installation de convoyage (F-1, F-2) transporte les objets est mesurée ou réglée à une valeur prédéfinie et
l'appareil de prise de vue (Ka) est commandé de telle sorte que la fréquence de prise de vue ($\lambda$) soit proportionnelle à la vitesse de transport (v) mesurée ou réglée.

13. Procédé selon l'une des revendications 1 à 12, **caractérisé en ce que**

- l'installation de convoyage (F-1, F-2) comprend un canal avec deux parois latérales (SF-1.1, SF-1.2, SF-2.1, SF-2.2), les parois latérales (SF-1.1, SF-1.2, SF-2.1, SF-2.2) s'étendant parallèlement à la direction de transport (T), et
- les prises de vue (Aufn [1], Aufn [2], ...) sont produites de telle sorte que
la section (BD) représentée dans les prises de vue (Aufn [1], Aufn [2], ...) de l'installation de convoyage (F-1, F-2) s'étende depuis l'une des parois latérales (SF-1.1, SF-1.2) jusqu'à l'autre paroi latérale (SF-2.1, SF-2.2).

14. Procédé selon l'une des revendications 1 à 13, **caractérisé en ce que**
la production des prises de vue (Aufn [1], Aufn [2], ...) comprend les étapes consistant **en ce que**

- de la lumière est émise dans la direction de prise de vue (B) et
- les réflexions de la lumière émise, produites par les objets transportés (Ps-1, Ps-2, ...) sont enregistrées.

15. Procédé selon l'une des revendications 1 à 14, **caractérisé en ce que**
l'évaluation des prises de vue (Aufn [1], Aufn [2], ...) comprend l'étape supplémentaire consistant **en ce que** il est calculé combien d'objets transportés (Ps-1, Ps-2, ...) passent dans un laps de temps prédéfini par la section du tracé de convoyage (F-1, F-2).

16. Procédé pour le transport d'objets (Pa-1, Ps-2, Ps-3),
le procédé comprenant les étapes selon lesquelles une installation de convoyage (F-1, F-2) transporte les objets (Ps-1, Ps-2, Ps-3) au moyen d'au moins un élément de transport (UF-1, UF-2),
chaque objet transporté (Ps-1, Ps-2, Ps-3) repose pendant le transport sur un élément de transport (UF-1, UF-2) et la vitesse avec laquelle l'installation de convoyage (F-1, F-2) transporte les objets est réglée au moins une fois, par utilisation du procédé selon l'une des revendications 1 à 15, sur la vitesse de transport de consigne calculée (V-Soll).

17. Dispositif pour la modification d'une vitesse de transport avec laquelle une installation de convoyage (F-1, F-2) transporte plusieurs objets (Ps-1, Ps-2, Ps-3), l'installation de convoyage (F-1, F-2) comprenant

- au moins un élément de transport (UF-1, UF-2) et
- un moteur (An-1, An-2) pour l'élément de transport (UF-1, UF-2) et

l'installation de convoyage (F-1, F-2) est conçue de sorte à transporter chaque objet (Ps-1, Ps-2, Ps-3) reposant sur un élément de transport (UF-1, UF-2) avec une vitesse de transport qui peut être modifiée,
le dispositif de modification comprenant

- un régulateur (Re),
- un appareil de prise de vue (Ka) et
- une unité d'évaluation (AE),
- l'appareil de prise de vue (Ka) étant conçu de sorte à produire, pendant le transport, plusieurs prises de vue (Aufn [1], Aufn [2], ...) d'une section (BD) de l'installation de convoyage (F-1, F-2) de sorte que l'appareil de prise de vue (Ka) produise toutes les prises de vue (Aufn [1], Aufn [2], ...) dans la même direction de prise de vue (B) verticalement ou en oblique vers le haut, et
- l'unité d'évaluation (AE) est conçue de sorte à évaluer ces prises de vue (Aufn [1], Aufn [2], ...),

l'appareil de prise de vue (Ka) étant conçu de sorte à produire les prises de vue (Aufn [1], Aufn [2], ...) pour que

- chaque prise de vue (Aufn [1], Aufn [2], ...) comprenne plusieurs éléments de prise de vue et
- une vue de chaque objet soit prise à partir d'au moins deux prises de vue (Aufn [1], Aufn [2], ...), et

l'unité d'évaluation (AE) étant conçue de sorte à évaluer les prises de vue (Aufn [1], Aufn [2], ...),
l'unité d'évaluation (AE) étant conçue de sorte,
pour chaque prise de vue (Aufn [1], Aufn [2], ...), à effectuer les étapes consistant

- à vérifier si ces prises de vue (Aufn [1], Aufn [2], ...) montrent au moins un objet, et
- pour chaque objet montré dans la prise de vue (Aufn [i]), à sélectionner à chaque fois au moins un élément de prise de vue (B [i, 1], B [i, N]) de cette prise de vue (Aufn [i]) qui provient de cet objet,

l'unité d'évaluation (AE) étant en outre conçue pour effectuer pour chaque prise de vue (Aufn [i]) l'étape consistant :

pour chaque premier élément de prise de vue (B [i, 1], ..., B [i, N]) de cette prise de vue (Aufn [i]) qui a été sélectionné comme provenant d'un objet,
soit à identifier au moins un deuxième élément de prise de vue d'une prise de vue suivante dans le temps (Aufn [i]), qui éventuellement a été sélectionné comme provenant d'un objet, et qui provient du même objet que le premier élément de prise de vue (Aufn [i]),
soit à constater qu'il n'y a dans aucune prise de vue suivante (Aufn [i+1]) un tel deuxième élément de prise de vue,

l'unité d'évaluation (AE) étant en outre conçue

- pour identifier tous les éléments de prise de vue sélectionnés qui proviennent chacun du même objet et
- pour mesurer chaque objet (Ps-1, Ps-2, Ps-3) qui est montré dans au moins une prise de vue, par évaluation de tous les éléments de prise de vue sélectionnés qui ont été identifiés comme provenant de cet objet, et

le régulateur (Re) étant conçu

- pour calculer une vitesse de transport de consigne du moteur (An-1, An-2) en fonction du résultat de la mesure de l'unité d'évaluation (AE) et
- pour commander le moteur (An-1, An-2) de telle sorte que le moteur déplace chaque élément de transport (UF-1, UF-2) avec la vitesse de transport de consigne (v-Soll).

18. Agencement pour le transport de plusieurs objets plats (Ps-1, Ps-2, ...),
l'agencement comprenant

- une installation de convoyage (F-1, F-2) et
- un dispositif de modification selon la revendication 17,

l'installation de convoyage (F-1, F-2) comprenant

- au moins un élément de transport (UF-1, UF-2) et
- un moteur (An-1, An-2) pour l'élément de transport (UF-1, UF-2) et

le régulateur (Re) du dispositif de modification étant conçu pour commander le moteur (An-1, An-2) en fonction des résultats de la mesure.

19. Dispositif de transport selon la revendication 18, **caractérisé en ce que**

- le dispositif de transport comprend deux installations de convoyage (F-1, F-2) entre lesquelles est prévue une fente (BD),
- le dispositif de transport est conçu de sorte à transporter chaque objet (Ps-1, Ps-2, ...) au-delà de la fente (BD), et
- l'appareil de prise de vue (Ka) est conçu de sorte à produire les prises de vue (Aufn [1], Aufn [2], ...) à travers la fente (BD).

20. Dispositif de transport selon la revendication 18 ou la revendication 19,
**caractérisé en ce que**

- l'installation de convoyage (F-1, F-2) comprend un canal avec deux parois de délimitation, les parois de délimitation s'étendant parallèlement à la direction de transport (T), et
- l'appareil de prise de vue (Ka) est conçu pour produire les prises de vue (Aufn [1], Aufn [2], ...) de sorte que
- la section (BD) représentée dans les prises de vue (Aufn [1], Aufn [2], ...) de l'installation de convoyage (F-1, F-2) s'étende depuis l'une des parois latérales jusqu'à l'autre paroi latérale.

FIG 1

# FIG 2

T

SF-1.2                    SF-2.2

Ps-2

Ps-3

UF-1                    UF-2

Ps-1

BD

SF-1.1                    SF-2.1

LS

①  An-1    An-2  ②

F-1                    F-2

# FIG 3

FIG 4a

Ps-1

FIG 4b

Ps-2

FIG 4c

Ps-3

## FIG 5a

Ps-a

Ps-b

## FIG 5b

UK-a

T

UK-b

## FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070073439 A1
- GB 2356699 A
- EP 2048596 A1
- WO 0174693 A1
- DE 102007037282 A1
- US 20060228100 A1
- DE 1160792 A
- US 3373685 A
- CH 463846

- US 20040186618 A1
- US 5331151 A
- US 20070071284 A1
- WO 03042082 A1
- EP 1115507 B1
- EP 1472165 B1
- DE 10038690 C1
- US 7110568 B2
- US 7085432 B2